# EUROPEAN PATENT APPLICATION

(11) **EP 2 940 562 A1**
(43) Date of publication of application: **04.11.2015**
(21) Application number: 13741961.0
(22) Date of filing: 21.03.2013
(51) Int. Cl.: G06F 3/048

(54) **ELECTRONIC APPARATUS AND INPUT METHOD**

(30) Priority: 27.12.2012 JP 2012285662
(71) Applicant: Kabushiki Kaisha Toshiba, Minato-ku Tokyo 105-8001 (JP)
(72) Inventor: KURITA, Yukihiro, Tokyo 105-8001 (JP); YOSHIHARA, Hiroto, Tokyo 105-8001 (JP); NUNOME, Tadatsugu, Tokyo 105-8001 (JP)
(74) Representative: Henkel, Breuer & Partner
(86) International application number: PCT/JP2013/058132
(87) International publication number: WO 2014/103357

(57) **Abstract**

According to an embodiment, an electronic device displays, in first mode, a first user interface having a first size on a screen, the first user interface including first icons corresponding to styles of drawing performed based on input from a first sensor, and displays, in second mode capable of displaying at least a menu to set the styles, a second user interface having a second size larger than the first size on the screen, the second user interface including second icons corresponding to the styles. If one of first icons is selected in the first mode, the electronic device performs drawing on the screen in a first style based on input from the first sensor, the first style corresponding to the one of the first icons.

## Description

### Technical Field

Embodiments of the present invention relate to a technique of handling handwritten data.

### Background Art

In recent years, various kinds of electronic devices, such as a tablet, a PDA and a smartphone, have been developed. Most electronic devices of this type include a touch screen display so as to facilitate user's input operation.

By touching menus or objects, which are displayed on a touch screen display, with a pen or his/her finger, a user can instruct an electronic device to perform functions associated with the menus or the objects. However, most of existing electronic devices including a touch screen display are consumer products pursuing operability for images, music, and other kinds of media data and may not necessarily be suitable for use in business scenes like conferences, negotiations, and product development. Thus, paper-based pocket notebooks have still been widely used are still widely used in business scenes.

Recently, technology to handle handwritten data such as handwritten characters has been developed.

### Citation List

### Patent Literature

Patent document 1: Jpn. Pat. Appln. KOKAI Publication No. 8-202857

### Summary of Invention

### Technical Problem

In business scenes, it is necessary to handle, in addition to simple handwritten memos, handwritten data containing many handwritten characters and handwritten figures and tables.

The object of an embodiment of the invention is to provide an electronic device and an input method which can easily handle handwritten data.

### Solution to Problem

According to an embodiment, an electronic device includes a display processing module and a switching module. The display processing module displays, in first mode, a first user interface having a first size on a screen, the first user interface comprising a plurality of first icons corresponding to a plurality of styles of drawing performed based on input from a first sensor. Also, the display processing module displays, in second mode capable of displaying at least a menu to set the plurality of styles, a second user interface having a second size larger than the first size on the screen, the second user interface comprising a plurality of second icons corresponding to the plurality of styles. The switching module switches a mode of the display processing module between the first mode and the second mode. If one of the plurality of first icons is selected in the first mode, the display processing module performs drawing on the screen in a first style based on input from the first sensor, the first style corresponding to the one of the plurality of first icons.

### Brief Description of Drawings

FIG. 1 is a perspective view illustrating an external appearance of an electronic device according to an embodiment.
FIG. 2 is a block diagram illustrating a system configuration of the electronic device in the embodiment.
FIG. 3 is a block diagram illustrating a functional configuration of a handwriting input program implemented by the electronic device of the embodiment.
FIG. 4 is a diagram illustrating a display example of an initial state of a desktop/drawer screen in the electronic device in the embodiment.
FIG. 5 is a diagram describing a display form of a note icon displayed on the desktop/drawer screen in the electronic device in the embodiment.
FIG. 6 is a diagram describing a display form of a note icon displayed on the desktop/drawer screen in the electronic device in the embodiment.
FIG. 7 is a diagram showing an example of the desktop/drawer screen in the electronic device in the embodiment.
FIG. 8 is a diagram showing an example of the desktop/drawer screen in the electronic device in the embodiment.
FIG. 9 is a diagram showing an example of the desktop/drawer screen in the electronic device in the embodiment.
FIG. 10 is a flowchart illustrating display processing corresponding to an input operation on the desktop/drawer screen in the electronic device in the embodiment.
FIG. 11 is a diagram illustrating a display example of a note icon list screen in the electronic device in the embodiment.
FIG. 12 is a diagram illustrating an example of a simple page list display screen in the electronic device in the embodiment.
FIG. 13 is a diagram illustrating an example of a screen in the electronic device in the embodiment, in which a note icon is being dragged.
FIG. 14 is a diagram illustrating an example of the desktop/drawer screen in the electronic device in the embodiment, which is displayed in response to the drag of the note icon.
FIG. 15 is a flowchart illustrating a transition display from a desktop/drawer screen to a desktop note screen in the electronic device in the embodiment.
FIG. 16 is a diagram illustrating an example of a transition image during a transition from the desktop/drawer screen to the desktop note screen in the electronic device in the embodiment.
FIG. 17 is a diagram illustrating an example of a transition image during a transition from the desktop/drawer screen to the desktop note screen in the electronic device in the embodiment.
FIG. 18 is a flowchart illustrating display processing corresponding to an input operation on the desktop note screen in the electronic device in the embodiment.
FIG. 19 is a diagram illustrating a display example of the desktop note screen in the electronic device in the embodiment.
FIG. 20 is a diagram illustrating an example of a page list screen in the electronic device in the embodiment.
FIG. 21 is a diagram illustrating an example of a page information display screen in the electronic device in the embodiment.
FIG. 22 is a diagram illustrating an example of a page operation in the electronic device in the embodiment.
FIG. 23 is a diagram showing a note view screen in pen input mode and the note view screen in menu display mode displayed by the electronic device in the embodiment.
FIG. 24 is a diagram showing an example of a submenu displayed by the electronic device in the embodiment.
FIG. 25 is a diagram showing the note view screen in detailed menu display mode displayed by the electronic device in the embodiment.
FIG. 26 is a diagram showing a range selection operation performed by the electronic device in the embodiment.
FIG. 27 is a diagram showing an effect applied to a selected range by the electronic device in the embodiment.
FIG. 28 is a diagram showing an example of the note view screen in pen input mode displayed by the electronic device in the embodiment.
FIG. 29 is a diagram showing an example of the note view screen in menu display mode displayed by the electronic device in the embodiment.
FIG. 30 is a diagram showing an example of the note view screen in menu display mode corresponding to a case when a pen icon other than the pen icon currently selected is selected.
FIG. 31 is a diagram showing a portion of a transition process from the note view screen in pen input mode to the note view screen in menu display mode.
FIG. 32 is a diagram showing another portion of the transition process from the note view screen in pen input mode to the note view screen in menu display mode.
FIG. 33 is a diagram showing still another portion of the transition process from the note view screen in pen input mode to the note view screen in menu display mode.
FIG. 34 is a diagram showing still another portion of the transition process from the note view screen in pen input mode to the note view screen in menu display mode.
FIG. 35 is a diagram showing still another portion of the transition process from the note view screen in pen input mode to the note view screen in menu display mode.
FIG. 36 is a flow chart showing a display processing procedure performed by the electronic device in the embodiment.

### Description of Embodiments

Various embodiments will be described hereinafter with reference to the accompanying drawings.

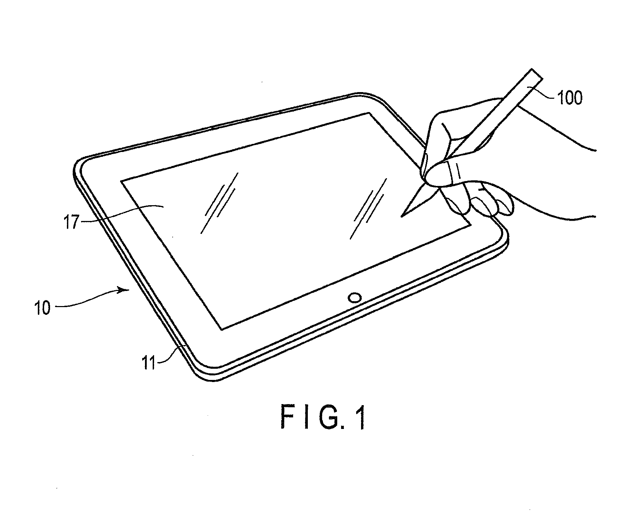

FIG. 1 is a perspective view illustrating an external appearance of an electronic device according to an embodiment. The electronic device is a pen-based portable electronic device which can execute a handwriting input by a pen or a finger. The electronic device may be implemented as a tablet computer, a notebook personal computer, a smartphone, a PDA, or the like. In the following, a case where the electronic device is implemented as a tablet computer 10 will be assumed. The tablet computer 10 is a portable electronic device, also called a tablet or straight computer, and includes a main body 11 and a touch screen display 17 as illustrated in FIG. 1. The touch-screen display 17 is attached such that the touch-screen display 17 is laid over the top surface of the main body 11.

The main body 11 includes a thin-box-shaped housing. The touch screen display 17 includes a flat-panel display, and a sensor (position detection device) configured to detect a contact position designated by a pen or finger on a screen of the flat-panel display. The flat-panel display may be, for instance, a liquid crystal display (LCD). As an example of the sensor, an electrostatic capacitance type touch panel or an electromagnetic induction type digitizer may be used. In the following, a case where both the two types of sensors, the digitizer and the touch panel, are included in the touch screen display 17 will be assumed.

Each of the digitizer and the touch panel is provided by overlapping with the screen of the flat panel display. The touch screen display 17 can detect not only a touch operation (contact operation) on the screen using a finger, but also a touch operation (contact operation) on the screen using a pen 100. The pen 100 may be, for example, a magnetic induction pen. The user can perform a handwriting input operation on the touch screen display 17 using the pen 100. A locus of movement of the pen 100 on the screen, that is, a stroke handwritten by a handwriting input operation (locus of a handwritten stroke) is drawn in real time during handwriting input operation and a plurality of handwritten strokes (locus of each handwritten strokes) input by handwriting are thereby displayed on the screen. A locus of movement of the pen 100 while the pen 100 is in contact with the screen corresponds to one handwritten stroke. A set of many handwritten strokes corresponding to handwritten characters, marks, figures, tables and the like, that is, a set of many loci (handwriting) constitutes a handwritten document. Hereinafter, a handwritten stroke may simply be called a stroke.

In addition, the user can make various gestures, for example, the tap, swipe, pinch-in, pinch-out, drag and the like on the touch screen display 17 using fingers.

The tablet computer 10 (electronic device) of the present embodiment records data of handwritten strokes as time-series information (stroke information) indicative of coordinate data series of loci of each stroke and an order relation between strokes, instead of image data. The time-series information means a set (stroke data series) of time-series coordinate data (coordinate data series). The order relation between the strokes represents the order in which the strokes are handwritten, that is, the stroke order.

The tablet computer 10 may read existing arbitrary time-series information from a storage medium and display, on the screen, a handwritten document corresponding to the time-series information, that is, the plurality of strokes (loci corresponding to the plurality of strokes) represented by the time-series information.

In the present embodiment, for example, the time-series information (stroke data sequence) is managed in page units. The tablet computer 10 performs management of each handwritten document by a note file including page data of at least one page. Also, the page data may include image data or text data, as well as the time-series information (stroke data sequence). Also, the tablet computer 10 may manage the time-series information (stroke data sequence) in association with other data. Examples of other data may include date and time data representing date and time, image or text data, and tag data.

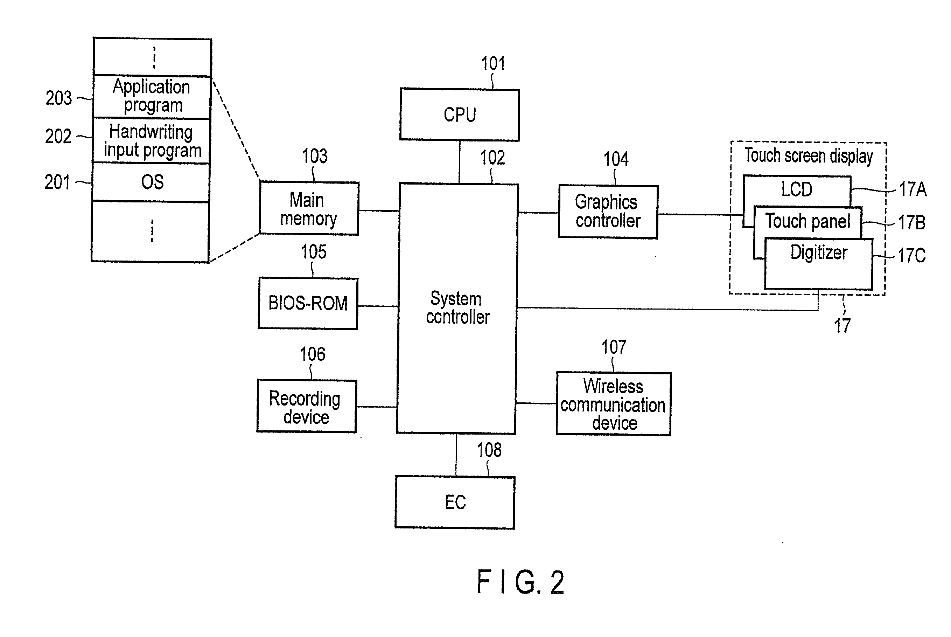

FIG. 2 is a diagram illustrating a system configuration of the tablet computer 10 in the embodiment.

The tablet computer 10, as illustrated in FIG. 2, includes a CPU 101, a system controller 102, a main memory 103, a graphics controller 105, a BIOS-ROM 105, a recording device 106, a wireless communication device 107, an embedded controller (EC) 108, and the like.

The CPU 101 is a processor that controls operations of various modules inside the tablet computer 10. The CPU 101 executes various programs that are loaded from the recording device 106 on the main memory 103. The programs executed by the CPU 101 include an operating system (OS) 201 and various application programs. The application programs include a handwriting input program 202 and other application programs 203. Examples of other application programs 203 include a handwritten character recognition program, a browser program, an image editing program, and a word processing program.

By executing the handwriting input program 202, the CPU 101 realizes a function of generating note data (page data (time-series information)) according to a handwriting input operation using the pen 100, a page edit function of editing a page included in a note file, and various functions related to generation and edit of a note file (or page).

Also, the CPU 101 also executes a basic input/output system (BIOS) stored in the BIOS-ROM 105. The BIOS is a program for hardware control.

The system controller 102 is a device that connects local bus of the CPU 101 and various components. The system controller 102 is also embedded with a memory controller that controls an access to the main memory 103. Also, the system controller 102 also has a function of performing communication with the graphics controller 104 via a serial bus or the like.

The graphics controller 104 is a display controller that controls an LCD 17A used as a display monitor of the tablet computer 10. A display signal generated by the graphics controller 104 is transmitted to the LCD 17A. The LCD 17A displays a screen image based on the display signal. A touch panel 17B as a sensor to detect the contact position of a finger on the screen is arranged in an upper layer of the LCD 17A. Further, a digitizer 17C as a sensor to detect the contact position of the pen 100 on the screen is arranged in a lower layer of the LCD 17A. The touch panel 17B is an electrostatic capacitance type pointing device configured to perform an input on the screen of the LCD 17A. A touch position touched on the screen by the finger and a movement of the touch position or the like is detected by the touch panel 17B. The digitizer 17C is an electromagnetic induction type pointing device configured to perform an input on the screen of the LCD 17A. A touch position touched on the screen by the pen 100 and a movement of the touch position or the like is detected by the digitizer 17C.

The wireless communication device 107 is a device configured to perform wireless communication such as wireless LAN or 3G mobile communication and the like.

The EC 108 is one-chip microcomputer including an embedded controller for power management. The EC 108 has a function of powering on or off the tablet computer 10 according to a user's power button operation.

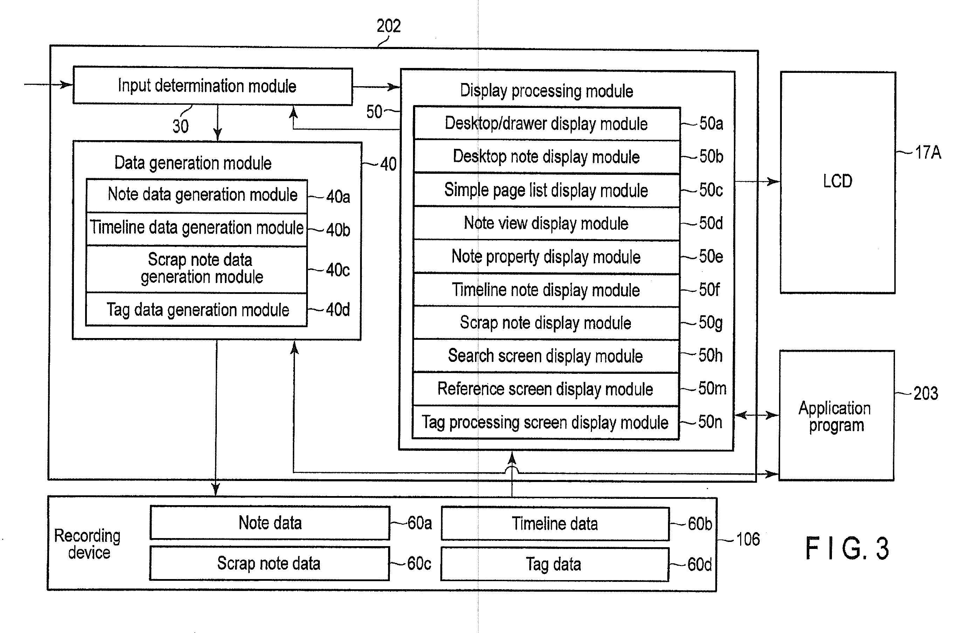

Next, the functional configuration realized by the handwriting input program 202 in the present embodiment will be described with reference to FIG. 3. By executing the handwriting input program 202, the CPU 101 realizes functions of an input determination module 30, a data generation module 40, a display processing module 50, and the like.

The input determination module 30 determines processing to be performed in accordance with an input operation using the pen 100 or a finger, based on the contact position or movement of the contact position on the screen detected by the touch screen display 17. The input determination module 30 determines whether data input in accordance with an input operation using the pen 100 or a finger is data (stroke data) to generate note data (handwritten page data) and the like by the data generation module 40 or data indicating an operation (gesture operation or the like) on the user interface screen displayed by the display processing module 50 based on the user interface screen displayed by the display processing module 50 on the LCD 17A.

The data generation module 40 generates various data based on stroke data input through user interface screens for various functions, which are displayed on the LCD 17A by the display processing module 50. The data generation module 40 includes a note data generation module 40a, a timeline data generation module 40b, a scrap note data generation module 40c, and a tag data generation module 40d.

The note data generation module 40a generates page data (handwritten page data) in page units included in the note file, based on stroke data input through a screen (note view screen) displayed by a note view display module 50d (described below). The note data generation module 40a records a plurality of note files in the recording device 106 as note data 60a. Also, the note data generation module 40a records a variety of page-related information as the note data 60a in association with each page. Examples of the page-related information include information on generated date and time, updated date and time, accessed date and time, presence or absence of tag (type of tag), file lock, template type, and paper setup.

Based on stroke data input through a screen (timeline note screen) displayed by a timeline note display module 50f (described below), the timeline data generation module 40b generates timeline data 60b in which page data and date and time data are associated with each other, and records the timeline data 60b in the recording device 106.

The scrap note data generation module 40c cooperates with other application program 203 (for example, the browser program, the image editing program, the word processing program, and the like) which is different from the handwriting input program 202, and generates scrap note data 60c, which records an image of an entire screen or a partial screen designated by the user from a screen displayed by the application program 203, through a screen displayed by a scrap note display module 50g (described below), and records the scrap note data 60c in the recording device 106. The scrap note data 60c may be used to display the scrap note screen by the scrap note display module 50g. Further, the scrap note data 60c may be imported to page data through the scrap note screen.

Based on stroke data input through a tag processing screen display module 50n (described below), the tag data generation module 40d generates tag data 60d and records the tag data 60d in the recording device 106.

The display processing module 50 displays user interface screens on the LCD 17A according to various functions. The display processing module 50 performs display processing according to an operation with respect to the user interface screen, for example, an operation of selecting an object (a note icon, a page, a button icon, a gadget icon, or the like), an operation of editing a page, and the like. The display processing module 50 includes a desktop/drawer display module 50a, a desktop note display module 50b, a simple page list display module 50c, a note view display module 50d, a note property display module 50e, a timeline note display module 50f, a scrap note display module 50g, a search screen display module 50h, a reference screen display module 50m, and a tag processing screen display module 50n.

The desktop/drawer display module 50a displays a desktop/drawer screen being a basic screen of the handwriting input program 202. The desktop/drawer display module 50a displays, on the desktop/drawer screen, note icon corresponding to a note file including one or more pages (one or more handwritten pages). The desktop/drawer display module 50a provides, on the desktop/drawer screen, a region (a storage region) for displaying a note icon representing a note file which has been completely generated and a region (a temporary region) for displaying a note icon representing a note file being during operation which is moved from the storage region, and displays the note icons in the respective regions (details will be described below). A plurality of note icons may be displayed in each of the storage region and the temporary region. When an input operation to specify some note icon among a plurality of note icons displayed in the temporary area or the storage area is performed, the desktop/drawer display module 50a selects the note icon in the plurality of note icons in accordance with the input operation, and displays a transition image (including animation) for transitioning the note icon to a style (called a desktop note screen or simply a desktop screen) in which one or more pages in the note file can be operated. Also, the desktop/drawer display module 50a may enlarge a display range of the storage region and switch to a grid display in which the plurality of note icons are disposed in a grid shape.

The desktop note display module 50b displays a desktop note screen for page edit with respect to the note file corresponding to the note icon selected on the desktop/drawer screen. Examples of the page edit include a display switch (page up/down) to a page to be browsed, a page insertion (addition), a page copy/paste, and the like. Also, the desktop note display module 50b displays, on the desktop note screen, a plurality of function icons or a plurality of button icons for transition to other functions. Examples of the function icons include a pen icon for transition to a note data generation function, a calendar icon for transition to a timeline note function, a scrap note icon for transition to a scrap note function, and a tag icon for transition to a tag function.

When a certain note icon displayed in the storage region (grid display) of the desktop/drawer screen is designated by the input operation, the simple page list display module 50c displays a simple page list screen that views a list of pages included in the note file corresponding to the designated note icon.

The note view display module 50d displays an note view screen capable of creating or editing a handwritten document (page) in accordance with a handwriting input operation using the pen 100. The note view display module 50d displays the note view screen, for example, in accordance with the page selection from the page list screen or simplified page list screen or in accordance with the page selection or the selection of a functional icon (pen icon) or a button icon on the desktop note screen. On the note view screen, a stroke in accordance with a handwriting input operation using the pen 100 can be written on the page. Further, image data or text data created by other application programs or data selected from a scrap note created by the scrap note function can also be copied onto the page. The note view display module 50d provides various tools for input of stroke data on the note view screen. For example, a setting tool is provided to set a width or color of the stroke (locus) displayed according to the input operation using the pen 100, a width of an eraser that erases the displayed stroke (locus), or the like.

For example, when the property display of the note file is instructed in the desktop note screen by the selection of the button icon, the note property display module 50e displays a note property screen that views the property of the note file subjected to page edit.

When the function icon (calendar icon) is selected in the desktop note screen, the timeline note display module 50f displays a timeline data screen for generating timeline data in which date and time data and page data are associated with each other by the timeline data function.

When the cooperating application program 203 starts up, the scrap note display module 50g displays a screen having captured an image displayed by the application program 203 (capture mode), and displays a screen for selecting (clipping) an image of an entire screen or a partial screen, which should be added to the scrap note data 60c, according to a user operation. In the image added to the scrap note data 60c, handwritten character or the like (stroke data sequence) may be written (added) by the handwriting input operation using the pen 100. Also, when the function icon (scrap note icon) is selected in the desktop note screen, the scrap note display module 50g displays the scrap note screen based on the scrap note data 60c. The scrap note display module 50g may display a list of images included in the scrap note data 60c and paste an image selected from the list to a page.

When a search icon displayed in the desktop/drawer screen, the desktop note screen, the note view screen, or the like is selected, the search screen display module 50h displays a search screen for searching note files or pages by the search function. In the search screen, a stroke sequence to be a search key may be input by, for example, the handwriting using the pen 100.

The reference screen display module 50m displays a page searched based on the search key (stroke sequence) by the search function. For example, the reference screen display module 50m may display a page group including the stroke sequence corresponding to (hit) the search key by a thumbnail list, and enlarge and display a page designated from the thumbnail list. Also, in the thumbnail or page display screen, the reference screen display module 50m displays the stroke sequence part corresponding to the search key in a form different from other parts by, for example, highlighting. Also, in the note icon or page list display, the reference screen display module 50m may display the list by sorting the note icons or pages (sort function) according to attribute data designated by the user (for example, generated date and time, updated date, similarity to search key, last browsed date, number of times of display, or the like). Also, in the note icon or page list display, the reference screen display module 50m may specify and display only a note icon or page corresponding to a condition designated by the user (filter function). For example, when the user designates attribute data (for example, a type of a tag added to a page), the filter function extracts only a note icon or page corresponding to the attribute data from the note data 60a and displays the extracted note icon or page.

When the function icon (tag icon) is selected in the desktop note screen, the tag processing screen display module 50n displays a screen that adds a tag to a page subjected to page edit. For example, the tag processing screen display module 50n adds an image representing a tag (for example, a rectangular image of a color different from page display) to a predetermined position of a page displayed on the desktop note screen. Also, when a tag icon button is selected from the menu, the tag processing screen display module 50n displays a tag menu that lists a plurality of types of different tags. In the tag menu, a plurality of tags each having, for example, a different display color is displayed. The tag processing screen display module 50n adds a tag selected from the tag menu to a page, and displays a screen that returns the tag to the menu according to an operation of peeling the tag added to the page. Also, the tag processing screen display module 50n displays strokes (handwriting) in the tag according to a stroke sequence representing handwritten input characters or the like with respect to the tag in the menu.

Next, the operation of the tablet computer 10 of the present embodiment will be described. First, display processing of the desktop/drawer screen by the desktop/drawer display module 50a will be described.

When the handwriting input program 202 starts up, the display processing module 50 displays the desktop/drawer screen on the LCD 17A by the desktop/drawer display module 50a.

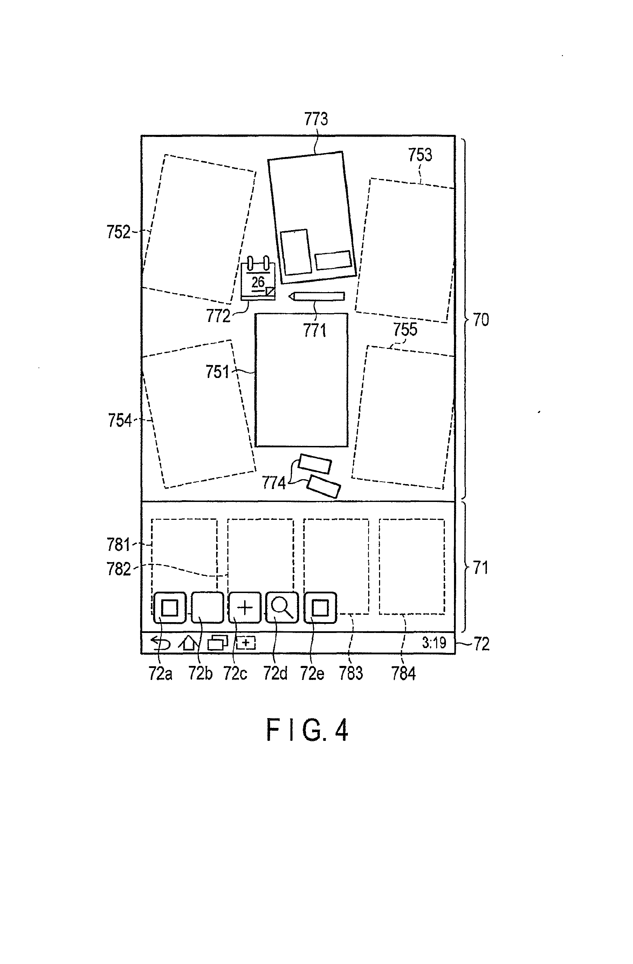

FIG. 4 is a diagram illustrating a display example of an initial state of the desk/drawer screen of the embodiment, in which no note file is generated.

The desktop/drawer screen includes a storage region 71 for displaying a note icon representing a note file which has been completely generated and a temporary region 70 for displaying a note icon representing a note file being during operation. Also, the desktop/drawer display module 50a displays a plurality of button icons 72a, 72b, 72c, 72d and 72e (context buttons) corresponding to the desktop/drawer screen in a lower portion of the desktop/drawer screen. Also, the functions corresponding to the respective button icons 72a to 72d will be described below.

Note icons of note files including pages generated by the note data generation function are displayed in the storage region 71. In the example illustrated in FIG. 4, note icon regions 781, 782, 783 and 784 displaying four note icons are provided in the storage region 71. The storage region 71 may display four or more note icons by expanding a display range of the storage region 71 by a predetermined operation.

The temporary region 70 includes a first region 751, a second region 752, a third region 753, a fourth region 754, and a fifth region 755 displaying five note icons. The first region 751 disposed in the center represents a position previously determined as an edit location of a note file. The first region 751 is a move destination of a note icon to be edited which is selected from the storage region 71 or the temporary region 70. The note icon moved to the first region 751 transitions to a form capable of operating the pages of the note file.

The note icon designated from the storage region 71 may be moved to the other four regions, the second region 752 to the fifth region 755. In the storage region 71, the note icons are arranged and displayed in a grid shape (herein, horizontal direction) along a normal direction of the display screen. In the temporary region 70, the note icons are displayed in a state in which the four regions, the second region 752 to the fifth region 755, are inclined with respect to the normal direction of the display screen. That is, in the temporary region 70, the note icons are disposed to give a messy impression so that the user can intuitively recognize that it is during operation.

Also, in the vicinity of the first region 751 of the temporary region 70, a plurality of function icons, for example, a pen icon 771, a calendar icon 772, a scrap note icon 773, and a tag icon 774, are displayed.

The pen icon 771 is provided to instruct a transition to the note data generation function, and is displayed in a pen shape so that the handwriting input using the note data generation function can be intuitively recognized.

The calendar icon 772 is provided to instruct a transition to the timeline note function, and characters representing year, month, day, and day of the week are displayed in the icon.

The scrap note icon 773 is provided to instruct a transition to the scrap note function, and images added to the scrap note data 60c by the scrap note function, or the like are displayed by thumbnails.

The tag icon 774 is provided to instruct an execution of the tag function, and is displayed by a rectangle so as to represent a tag. In the example illustrated in FIG. 4, two tags of different colors are included in the tag icon 774.

Also, in the desktop/drawer screen, the function icons disposed in the vicinity of the first region 751 cannot be used. When transitioning from the desktop/drawer screen to the desktop note screen, the range, which includes the function icons disposed in the vicinity of the first region 751 and the first region 751 of the desktop/drawer screen, is expanded and displayed as the desktop note screen. The function icons may be used in the expanded display state in the desktop note screen.

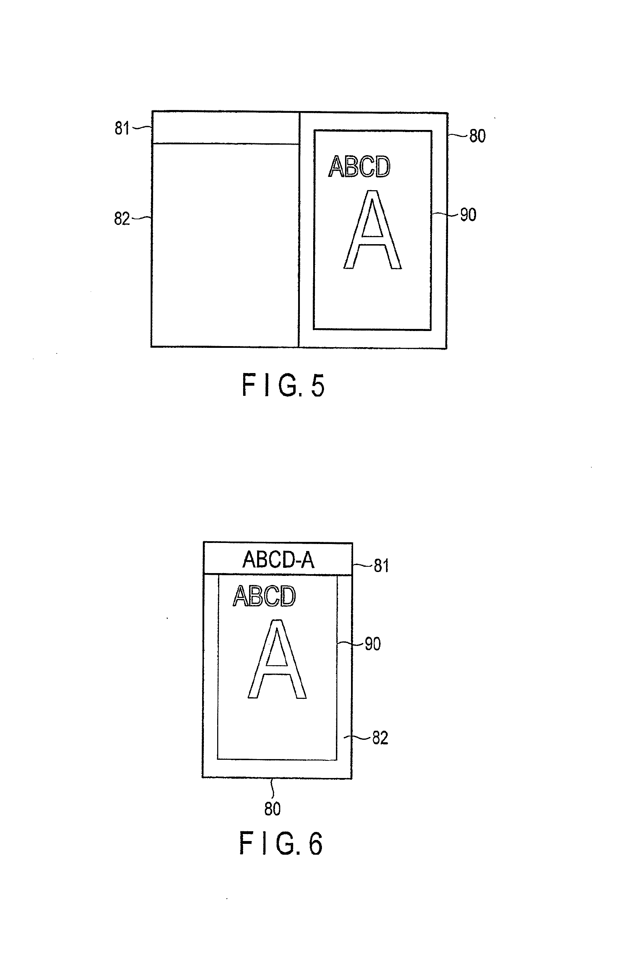

FIGS. 5 and 6 are diagrams describing the display form of the note icon displayed on the desktop/drawer screen.

In the embodiment, a figured note icon of a state in which a document (page) is bound to a real note (clear file) is used. FIG. 5 illustrates a state in which the note 80 is opened and the page 90 to be bound is exposed. FIG. 6 illustrates a state in which an outer sheet 82 of the note 80 is closed. Since the outer sheet 82 of the note 80 is transparent, FIG. 6 illustrates that the described contents of the bound first page (input handwriting or the like) are transparently shown. In an upper surface portion 81 of the outer sheet 82, identification information (document name or the like) for identifying the document (page) bound to the note 80 is described.

Since the contents of the bound page are displayed in the figured note icon of the note illustrated in FIG. 6, the user can easily identify the contents of the note file corresponding to the note icon. Also, by enabling the user to input identification information to the note icon by the handwriting input, the identification information may be displayed in the note icon, like the identification information described in the upper surface portion 81 of the outer sheet 82 illustrated in FIG. 6. In this manner, it is possible to identify not only the contents of the page but also the contents of the note file corresponding to the note icon by the identification information. Also, the identification information in the note icon is omitted in the following drawings.

Next, an example of an operation of arranging note icons in the desktop/drawer screen of the embodiment will be described.

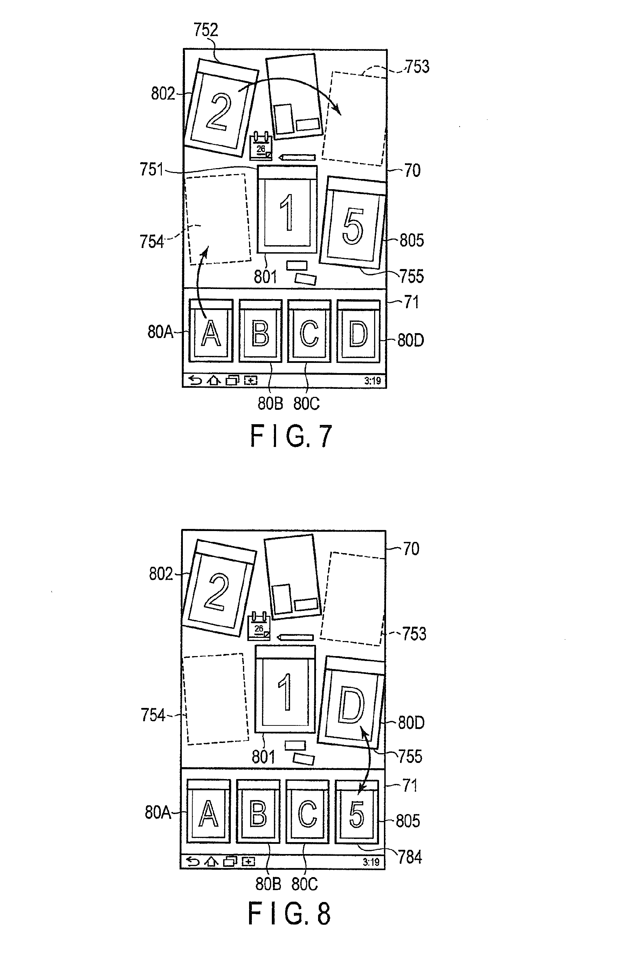

FIG. 7 illustrates an example of the desktop/drawer screen in which a plurality of note icons are arranged in the temporary region 70 and the storage region 71. When the note data 60a is recorded by the note data generation function, the desktop/drawer display module 50a displays the note icons in the storage region 71 based on the note data 60a.

In FIG. 7, the desktop/drawer display module 50a displays four note icons 80A to 80D in the storage region 71. Also, the desktop/drawer display module 50a displays the note icon 801 in the first region 751 of the temporary region 70, the note icon 802 in the second region 752, and the note icon 805 in the fifth region 755.

In the desktop/drawer screen, the display position of the note icon may be moved by the touch operation by the pen 100 or finger. For example, when the note icon is pressed and held (more than a predetermined time has elapsed while keeping a touched state), the desktop/drawer display module 50a sets the note icon to a draggable state. For example, when the note icon 80A displayed in the storage region 71 illustrated in FIG. 7 is pressed and held and is dragged to the fourth region 754 of the temporary region 70 and then dropped (touch end), the desktop/drawer display module 50a displays the note icon 80A in the fourth region 754 of the temporary region 70.

Also, in a similar manner, when the note icon 802 disposed in the second region 752 of the temporary region 70 is dragged to the third region 753, the desktop/drawer display module 50a moves the note icon 802 to the position of the third region 753. Also, when the note icon 80D is dragged to the fifth region 755 in which the note icon 80D has already been displayed, the desktop/drawer display module 50a, as illustrated in FIG. 8, displays the note icon 80D in the fifth region 755 and displays the note icon 805 having been displayed in the fifth region 755 in the note icon region 784. That is, the desktop/drawer display module 50a exchanges the display positions of the note icon 805 and the note icon 80D.

In this manner, an arbitrary note icon from the storage region 71 may be disposed in the temporary region 70 by the drag operation. Also, the note icon may be disposed at an arbitrary position even within the temporary region 70. Therefore, the note icons may be disposed according to the user's preference. For example, a frequently used note icon (note file) may be disposed at a position at which the operation is facilitated.

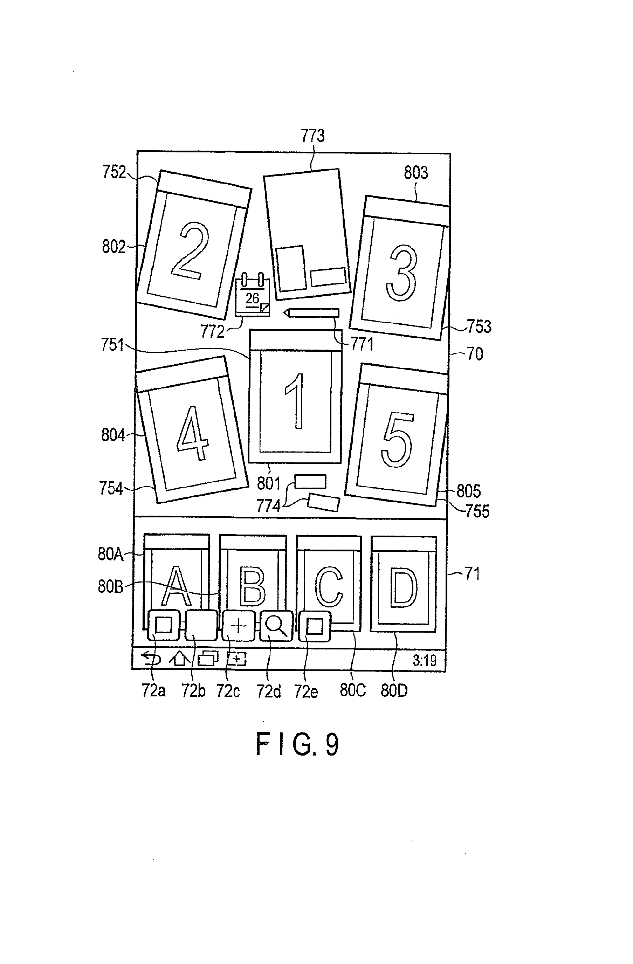

FIG. 9 illustrates an example in which the note icons 801, 802, 803, 804 and 805 are disposed in the five regions 751, 752, 753, 754 and 755 of the temporary region 70, respectively.

Also, for example, the desktop/drawer display module 50a displays the four note icons 80A, 80B, 80C and 80D in the storage region 71 in new order of date and time displayed in the temporary region 70. Also, new order of date and time subjected to page edit may be used. Also, note icons may be disposed in descending order of number of times subjected to page edit.

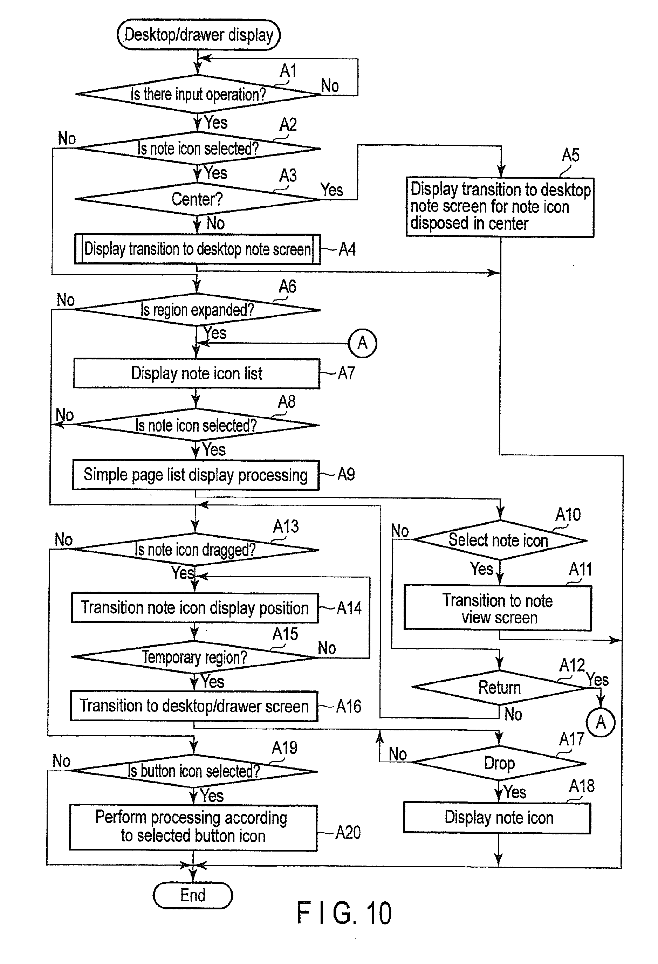

Next, display processing according to input operation on the desktop/drawer screen will be described with reference to a flowchart illustrated in FIG. 10.

By performing a gesture operation using the pen 100 or finger with respect to the desktop/drawer screen, the user can instruct a transition to other function or a screen switch. Examples of the gesture operation include a tap operation, a pinch-out/pinch-in operation, a swipe operation, a flick operation, and a drag operation.

When there is the input operation with respect to the touch screen display 17 on which the desktop/drawer screen is displayed (step A1, Yes), the input determination module 30 causes the display processing module 50 to perform display processing according to the input operation.

For example, in the vicinity of a boundary line between the storage region 71 and the temporary region 70, when there is an input operation of instructing an expansion of the storage region 71 by, for example, a vertical pinch-out operation or a drag operation of moving the boundary line in an upward direction (step A6, Yes), the desktop/drawer display module 50a expands the display range of the storage region 71 and displays a note icon list screen (drawer screen) displaying a list of note icons (step A7).

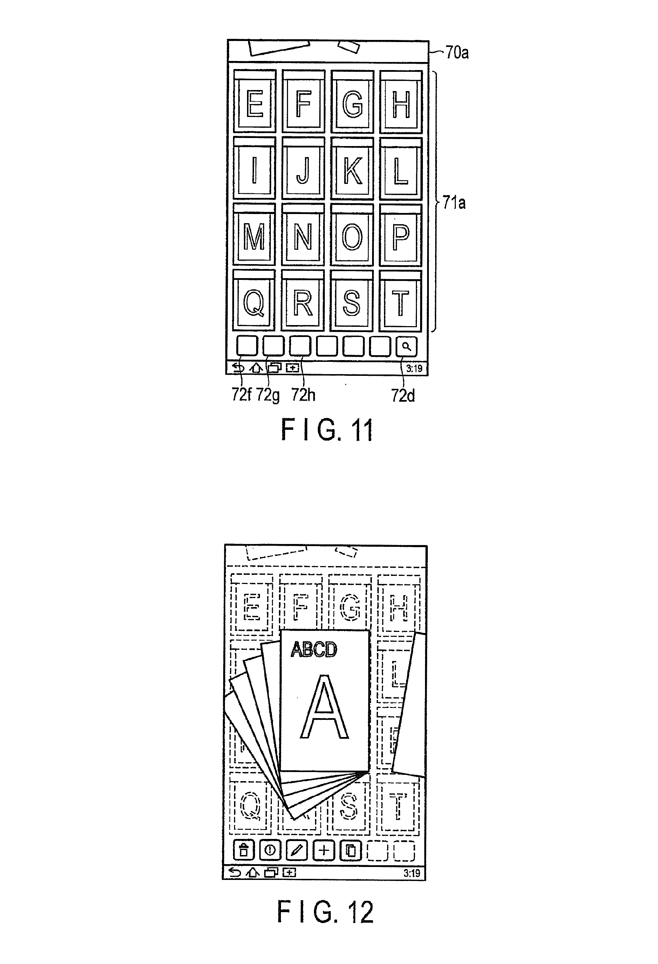

FIG. 11 illustrates a display example of the note icon list screen (drawer screen). As illustrated in FIG. 11, in the note icon list screen, the temporary region 70a is reduced and the storage region 71a is expanded. In the storage region 71a, the note icons are disposed and displayed in a grid shape. Also, the desktop/drawer display module 50a displays a plurality of button icons 72d, 72f, 72g and 72h (context buttons) according to the note icon list screen (drawer screen).

When the temporary region 70a is swiped in the drawer screen, or when the pinch-in operation is performed in the storage region 71a, the desktop/drawer display module 50a reduces the storage region 71a and expands the temporary region 70a, such that the display is returned to the original desktop/drawer screen illustrated in FIG. 9.

For example, when a vertical swipe operation is performed in the storage region 71a, the desktop/drawer display module 50a scrolls the drawer screen in a vertical direction to display other note icons that cannot be displayed on one screen. Also, for example, when a horizontal swipe operation or flick operation is performed in the storage region 71 illustrated in FIG. 9, the desktop/drawer display module 50a scrolls the screen inside the storage region 71 to change to a display of another note icon.

In the note icon list screen (drawer screen) illustrated in FIG. 11, when the note icon is designated by a tap operation or the like in (step A8, Yes), the desktop/drawer display module 50a performs simple page list display processing by the simple page list display module 50c. The simple page list display module 50c displays the screen (simple page list display screen) deploying the pages included in the note file corresponding to the note icon designated from the note icon list screen (step A9).

FIG. 12 is a diagram illustrating an example of the simple page list display screen. As illustrated in FIG. 12, in the simple page list display screen, for example, the first page of the note file (the outline of the page is rectangular) is displayed in the center. Furthermore, when a plurality of pages is included in the note file, the respective pages are shifted and displayed such that parts of the pages are not overlapped with one another. By deploying and displaying the plurality of pages, the overview of the page configuration of the note file can be easily grasped. Also, all pages are not deployed, and pages of which the number exceeds a preset upper limit (for example, five pages) are not deployed.

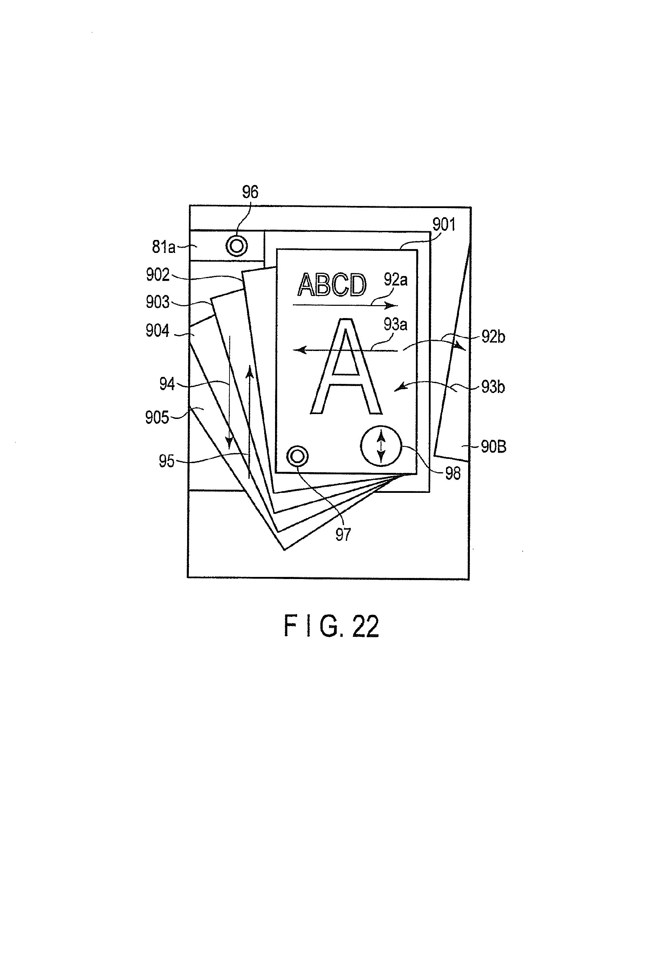

In the simple page list display screen, a simple page edit function can be executed. For example, the simple page list display module 50c displays a plurality of button icons related to the page edit on the simple page list display screen. For example, the simple page edit function may execute not only a display switch (page up/down) according to the operation on the displayed page (see FIG. 22) but also a page deletion, a display of page information, a transition to a note view screen (note data generation function), a page insertion (addition), and a page copy/paste according to the operation of the button icons.

Also, when the page displayed by the display switch is tapped (step A10, Yes), the simple page list display module 50c transitions to the note view screen (note data generation function) where handwriting input is possible with respect to the note. Details of the note view screen (note data generation function) will be described below (step A11).

Also, when tapped in the range outside the page of the simple page list display screen (step A12, Yes), the simple page list display module 50c transitions to the note icon list screen (drawer screen) by the desktop/drawer display module 50a (step A7).

Also, in the note icon list screen (drawer screen), the note icon may be dragged and moved to the temporary region 70. When the note icon displayed in the storage region 71a is pressed and held, the desktop/drawer display module 50a sets the note icon to a draggable state, and changes the display position of the note icon according to the drag operation (steps A13 and A14).

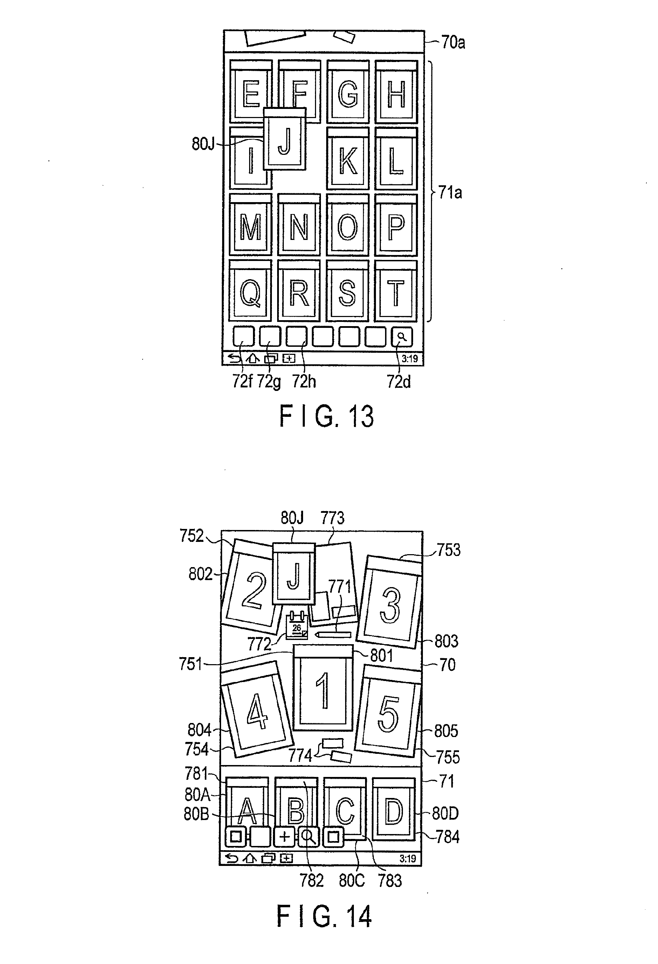

FIG. 13 is an example of a screen in which the note icon 80J displayed in the storage region 71a is being dragged.

When the note icon 80J is dragged to the temporary region 70a (step A15, Yes), the desktop/drawer display module 50a switches a display to the desktop/drawer screen (step A16) without changing the display position of the note icon 80J.

FIG. 14 is a diagram illustrating an example of the desktop/drawer screen displayed in response to the drag of the note icon 80J.

When the note icon 80J is dragged to any one region 751 to 755 of the temporary region 70 and then dropped (step A17, Yes), the desktop/drawer display module 50a displays the note icon 80J in a region of drag destination (step A18). Also, when dragged to any one of the note icon regions 781 to 784 of the storage region 71, the desktop/drawer display module 50a displays the note icon 80J in a certain note icon region of the drag destination.

Also, the desktop/drawer display module 50a displays the button icons 72a, 72b, 72c, 72d and 72e on the desktop/drawer screen as illustrated in FIGS. 4 and 9, and displays the button icons 72d, 72f, 72g and 72h on the note icon list screen (drawer screen) as illustrated in FIG. 11. When there is an operation of selecting the button icons 72a, 72b, 72c, 72d, 72e, 72f, 72g and 72h, for example, an operation of tapping the button icon (step A19, Yes), the desktop/drawer display module 50a performs processing according to the selected button icon (step A20).

For example, the button icon 72a is a button icon used to instruct a transition to the desktop note screen, the button icon 72b is a button icon used to instruct a transition to the note icon list screen (drawer screen), the button icon 72c is a button icon used to instruct an addition of a new note icon to the storage region 71, the button icon 72d is a button icon used to instruct an execution of the search function of the note file (page), and the button icon 72e is a button icon used to instruct a transition to the setting screen for setting various functions of the handwriting input program 202. Also, the button icon 72f is used to instruct a transition to the desktop/drawer screen, the button icon 72g is used to instruct an execution of the sort function of sorting note icons displayed in the storage regions 71a (or 71), and the button icon 72h is used to instruct an execution of the filter function of specifying note icons displayed in the storage regions 71a (or 71) by only the note icons corresponding to the condition.

Also, the desktop/drawer display module 50a may display relevant button icons other than the above-described functions. Also, when all the button icons cannot be displayed on one screen, the type of the button icons may be changed by scrolling the display of the button icons.

Next, the transition from the desktop/drawer screen to the desktop note screen will be described.

In the desktop/drawer screen illustrated in FIG. 9, when the note icon is selected by the tap operation (step A2, Yes), the desktop/drawer display module 50a transitions to the desktop note screen for page edit with respect to the note file corresponding to the selected note icon.

When a note icon other than the note icon 801 of the first region 751 disposed in the center of the temporary region 70 is selected by tapping (step A3, Yes), the desktop/drawer display module 50a displays a transition image (including an animation) that transitions the selected note icon in a form (desktop note screen) that can manipulate the page of the note file (step A4).

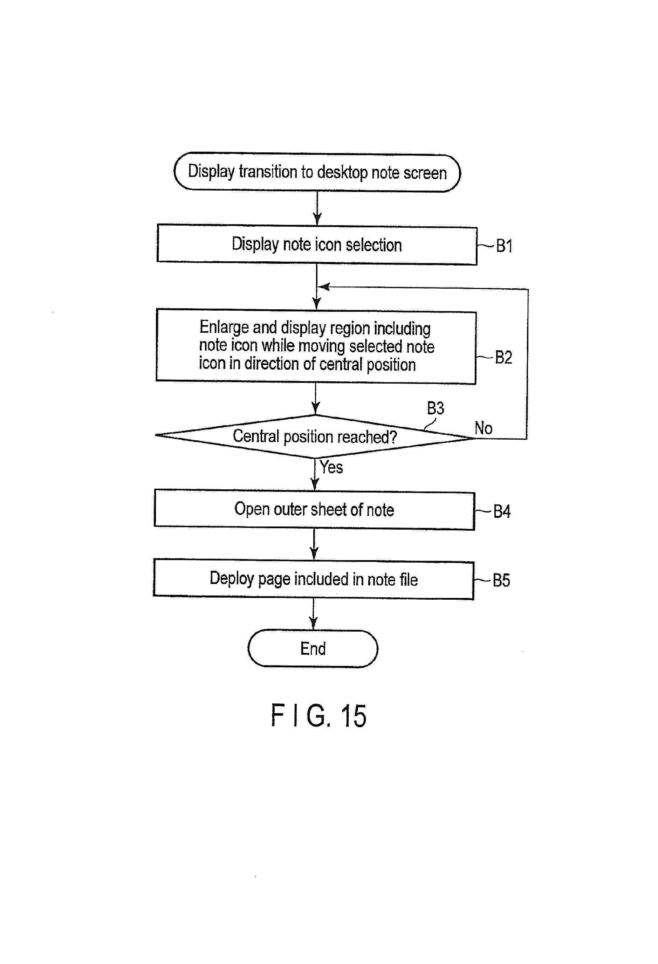

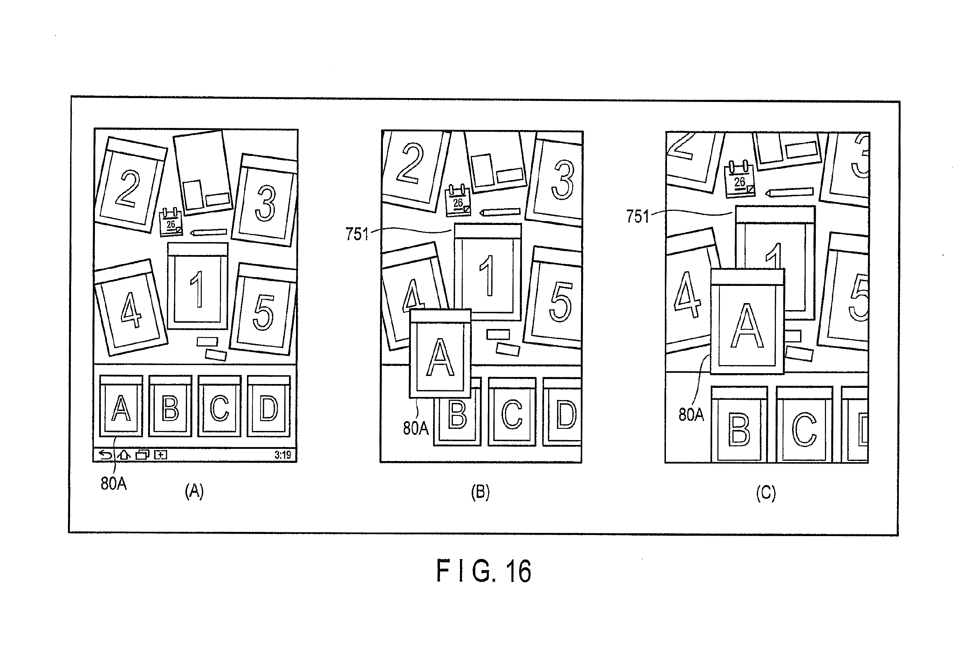

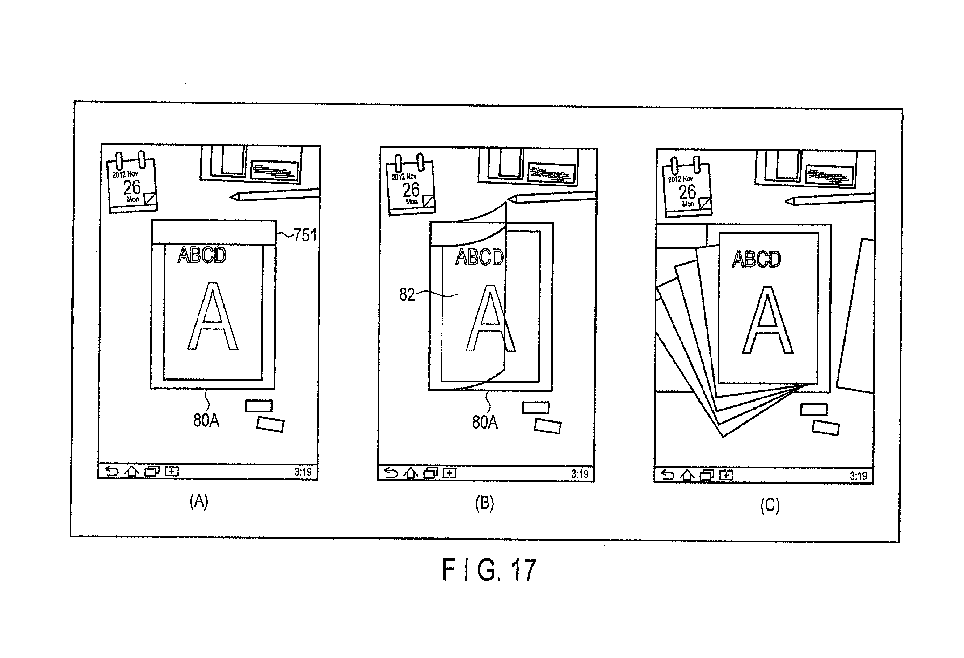

FIG. 15 is a flowchart illustrating a transition display from the desktop/drawer screen to the desktop note screen in an embodiment. (A), (B), (c) of FIG. 16 and (A), (B), (c) of FIG. 17 illustrate an example of the transition image during the transition from the desktop/drawer screen to the desktop note screen. Any image may be used as the transition image, as long as the image is an image being displayed during the transition from the desktop/drawer screen to the desktop note screen, or during the transition from the desktop note screen to the desktop/drawer screen. In the desktop/drawer screen, the display form of the note icons is a form that can select at least one or more note icons. In the desktop note screen, the display form of the note icon is a form that can operate the page of the corresponding note file.

First, the desktop/drawer display module 50a changes the display form of the note icon selected by the tap operation or the like (step B1). For example, when the icon 80A on the screen illustrated in (A) of FIG. 16 is selected, the desktop/drawer display module 50a slightly enlarges the note icon 80A at the same position. Subsequently, as illustrated in (B) and (C) FIG. 16, the desktop/drawer display module 50a moves the note icon 80A in a direction of the first region 751. Also, the desktop/drawer display module 50a expands and displays the desktop/drawer screen in the vicinity of the note icon 80A, including the note icon 80A, according to the movement of the note icon 80A (step B2). That is, the desktop/drawer display module 50a displays the transition image (including an animation) that expands and displays the vicinity of the first region 751, while moving the note icon 80A to the first region 751 (center direction).

As illustrated in (A) of FIG. 17, when the note icon 80A is moved to the first region 751 (center position) (step B3, Yes), the desktop/drawer display module 50a displays the transition image (including an animation) that changes the display form of the note icon, as illustrated in (B) of FIG. 17, so as to show the opening of the outer sheet 82 of the note 80 described with reference to FIG. 6 (step B4). That is, in order to set the note file to an editable state, the transition image (including an animation) allowing the user to recognize the opening of the note file (note) is displayed.

When displaying the opening of the note file is completed, the desktop/drawer display module 50a displays the transition screen (including an animation) deploying the pages included in the note file by the desktop note display module 50b (step B5). For example, the desktop note display module 50b displays the first page of the note file (outline of the page is rectangular) in the center. Furthermore, when a plurality of pages is included in the note file, the respective pages are shifted and displayed such that parts of the pages are not overlapped with one another. By deploying and displaying the plurality of pages, the overview of the page configuration of the note file can be easily grasped. Also, all pages are not deployed, and pages of which the number exceeds a preset upper limit (for example, five pages) are not deployed. (C) of FIG. 17 illustrates a state in which a plurality of pages included in the note file are deployed. In this manner, the transition from the desktop/drawer screen to the desktop note screen is completed.

Therefore, when the note icon is selected by the touch operation (tap) in the desktop/drawer screen, the transition image (including an animation) that transitions the note icon to the screen that deploys the pages included in the note file is displayed. Therefore, the user can intuitively recognize that the page within the note file has transitioned to the manipulable state.

Also, when the note icon 801 disposed in the first region 751 illustrated in FIG. 9 is selected (tapped) (step A3, Yes), the desktop/drawer display module 50a displays the transition image for the note icon disposed in the center (first region 751) because the note icon need not be moved in the direction of the first region 751 (step A5). That is, the desktop/drawer display module 50a displays the transition image that enlarges and displays the note icon 801 disposed in the first region 751 in the desktop/drawer screen, and the vicinity of the note icon 801, transitions to the display screen illustrated in (A) of FIG. 17, and then, transitions to the image as illustrated in (B) of FIG. 17 and (C) of FIG. 17. In this manner, the desktop/drawer display module 50a transitions to the desktop note screen.

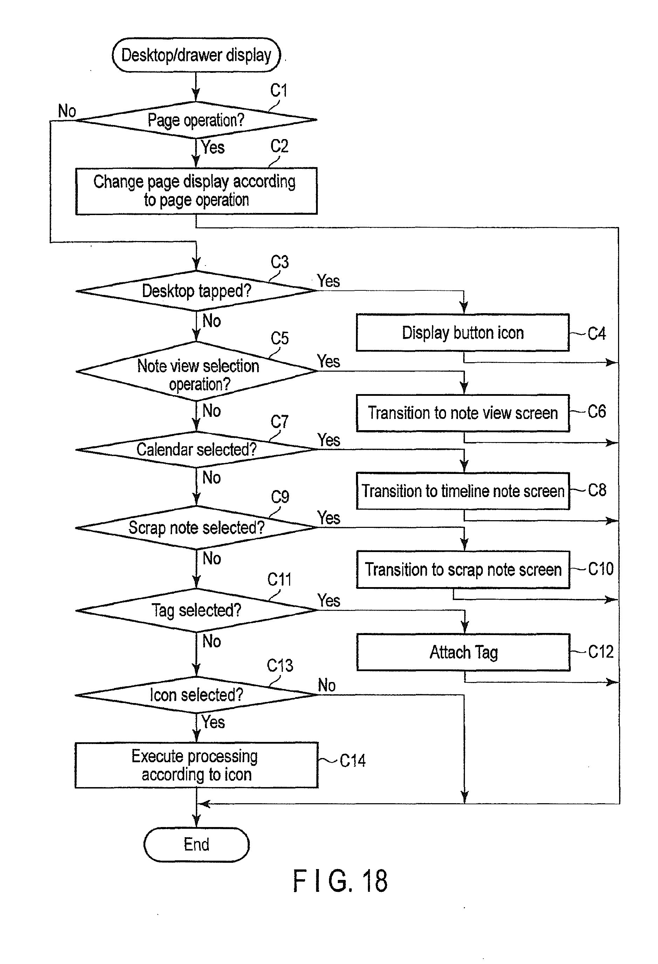

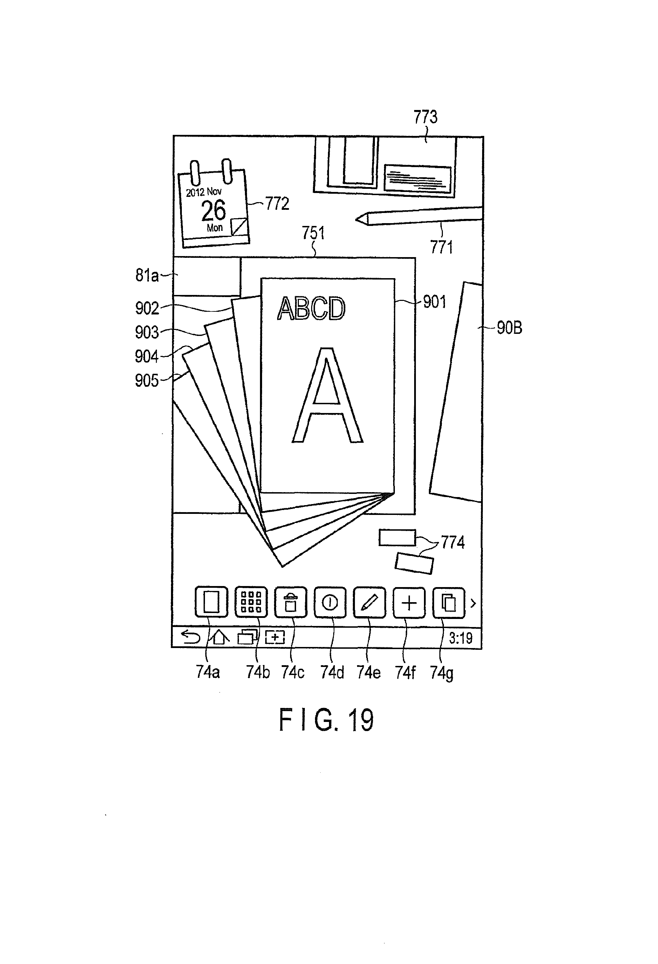

Next, display processing according to input operation on the desktop note screen will be described with reference to a flowchart illustrated in FIG. 18. FIG. 19 illustrates a display example of the desktop note screen.

By performing a gesture operation using the pen 100 or finger with respect to the desktop note screen, the user can instruct a transition to other function or a screen switch. Examples of the gesture operation include a tap operation, a pinch-out/pinch-in operation, a swipe operation, a flick operation, and a drag operation.

At the time of the transition of the desktop note screen, the desktop note display module 50b may always display the first page and may also display the page displayed at last in the previous desktop note screen. In the desktop note screen illustrated in FIG. 19, the desktop note display module 50b, for example, displays a page 901 included in the note file, and displays a plurality of pages 902, 903, 904 and 905 while being shifted from the page 901. That is, the note file is displayed in a style in which at least a portion of each of the plurality of pages 901, 902, 903, 904, 905 is visible and also the plurality of pages 901, 902, 903, 904, 905 is overlaid. Also, on the right side of the page 901, a paged-up/down page 90B is displayed. Also, the desktop note display module 50b displays, for example, the pen icon 771, the calendar icon 772, the scrap note icon 773, and the tag icon 774 in the vicinity of the note file (first region 751).

When the region (desktop) where nothing is displayed in the desktop note screen is tapped (step C3, Yes), the desktop note display module 50b displays a plurality of button icons 74a, 74b, 74c, 74d, 74e, 74f and 74g as illustrated in FIG. 19 (step C4).

When there is an operation of selecting the button icons 74a, 74b, 74c, 74d, 74e, 74f and 74g, for example, an operation of tapping a certain button icon (step C13, Yes), the desktop note display module 50b performs processing according to the selected button icon (step C14).

For example, the button icon 74a is used to instruct a transition to the desktop/drawer screen, the button icon 74b is used to instruct a transition to the page list screen (grid display screen), the button icon 74c is used to instruct a deletion of the page displayed in the desktop note screen, the button icon 74d is used to instruct a display of page information, the page icon 74e is used to instruct a transition to the note view screen (note data generation function), the button icon 74f is used to instruct an addition of page, and the button icon 74g is used to instruct an execution of page copy.

Also, when all the button icons cannot be displayed on one screen, the type of the button icons may be changed by scrolling the display of the button icons. For example, except for the button icons illustrated in FIG. 19, there is a button icon for transition to the tag function.

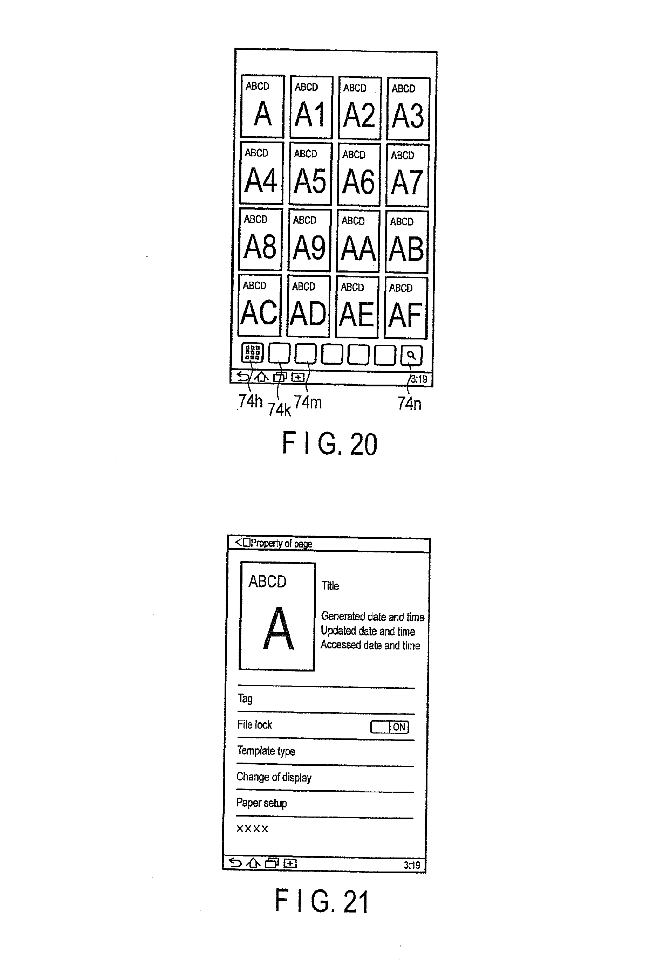

FIG. 20 is a diagram illustrating an example of the page list screen (grid display screen) displayed according to the tap of the button icon 74b. The desktop note display module 50b arranges and displays all pages included in the note file in a grid shape. In a case where all pages cannot be displayed on one screen, for example, when a vertical swipe operation is performed on the page list screen, the desktop note display module 50b scrolls the page list screen in a vertical direction to display other pages that cannot be displayed on one screen.

Also, the desktop note display module 50b displays a plurality of button icons (context buttons) 74h, 74k, 74m and 74n according to the page list screen.

Also, the button icon 74h is used to instruct a transition to the desktop note screen (grid display release), the button icon 74k is used to instruct an execution of the sort function of sorting the pages displayed on the page list screen, the button icon 74m is used to instruct an execution of the filter function of specifying the pages displayed on the page list screen by only the note icon corresponding to the condition, and the button icons 74n is used to instruct an execution of the search function of searching the pages. Also, when the pinch-in operation is performed on the page list screen, the desktop note display module 50b releases the grid display and returns to the desktop note screen, as in the case where the button icon 74h is tapped.

FIG. 21 is a diagram illustrating an example of the page information display screen (property screen) displayed according to the tap of the button icon 74d of FIG. 19. The note property display module 50e searches the note data 60a for the page information of the page displayed on the top of the desktop note screen, and displays the searched page information together with the page thumbnail. As illustrated in FIG. 21, examples of the page information include generated date and time, updated date and time, accessed date and time, presence or absence (type) of tag, file lock, template type, and paper setup.

Also, when there is an input operation (page operation) with respect to the page (step C1, Yes) in the desktop note screen, the desktop note display module 50b changes the page display according to the page operation (step C2). When changing the page display, the desktop note display module 50b displays the movement of the page by a transition image (including an animation).

FIG. 22 is a diagram illustrating an example of the page operation.

For example, when there is a swipe operation (or flick operation) 92a from left to right with respect to the page 901 displayed in the center, or when there is a swipe operation (or flick operation) 92b from the page 901 to the page 90B, the desktop note display module 50b pages up/down the page 901 to move to the position of the page 90B, newly displays the page 902 in the center, and changes the other pages 903 to 905 to the positions shifted in the central direction. By this page operation, the page may be sent forward (riffled) at each page.

When there is a swipe operation (or flick operation) 93a from right to left with respect to the page 901 displayed in the center, or when there is a swipe operation (or flick operation) 93b from the page 90B to the page 901, the desktop note display module 50b moves the page riffled to the position of the page 90B to the central position, and changes the other pages to the positions moved rearward. By this page operation, the page may be returned at each page.

When there is a swipe operation (or flick operation) 94 from top to bottom in the leftward region as compared with the central page 901, the desktop note display module 50b sends forward all the other pages at each page until the last page included in the note file is displayed in the center. In this manner, even when a plurality of pages is included in the note file, the last page may be simply displayed.

When there is a swipe operation (or flick operation) 95 from bottom to top in the leftward region as compared with the central page 901, the desktop note display module 50b returns all the pages sent forward at each page until the first page included in the note file is displayed in the center. In this manner, even when a plurality of pages is sent forward, the first page may be simply displayed.

Also, although the direction of the swipe operations 94 and 95 is assumed as a vertical direction in FIG. 22, it may be an inclined direction. Also, although the page up/down is performed to the last page or the first page by the swipe operations 94 and 95, the number of the pages subjected to page up/down may be varied according to a distance on the screen where the swipe operation has been performed. Also, when the flick operation is performed, the number of the pages subjected to page up/down may be varied according to the intensity of the operation.

When there is a tap operation 96 in an upper left region 81a of the central page 901, the desktop note display module 50b transitions the desktop note screen to the desktop/drawer screen. That is, the desktop note display module 50b transitions the transition images, which has been described with reference to (A), (B), (C) of FIG. 16 and (A), (B), (C) of FIG. 17, in an opposite direction. In this manner, the user can intuitively recognize the completion of the page operation with respect to the note file.

When a pinch-out operation 98 is performed on the central page 901, the desktop note display module 50b transitions to the page list screen (grid display screen) illustrated in FIG. 20, and arranges and displays all pages included in the note file in a grid shape. Therefore, the pinch-in operation and the pinch-out operation may simply switch the desktop note screen illustrated in FIG. 19 and the page list screen (grid display screen) illustrated in FIG. 20.

As illustrated in FIG. 22, when the tap operation 97 is performed on the central page 901 (step C5, Yes), the desktop note display module 50b displays the note view screen (note data generation function) by the desktop note display module 50b (step C6). Also, even when the tap operation to the page icon 74e of FIG. 19 is performed, the desktop note display module 50b transitions to the note view screen (step C6). Incidentally, if the calendar icon 772 on the desktop note screen is tapped (step C7, Yes), the desktop note display module 50b migrates to the timeline note screen (step C8). If the scrap note icon 773 on the desktop note screen is tapped (step C9, Yes), the desktop note display module 50b migrates to the scrap note screen (step C10). If the tag icon 774 on the desktop note screen is tapped (step C11, Yes), the tag processing screen display module 50n affixes a tag to the page 901 to be displayed in the center (step C12). If an operation to select the button icon 74a, 74b, 74c, 74d, 74e, 74f, or 74g is performed (step C13, Yes), the desktop note display module 50b performs processing corresponding to the selected icon button (step C14).

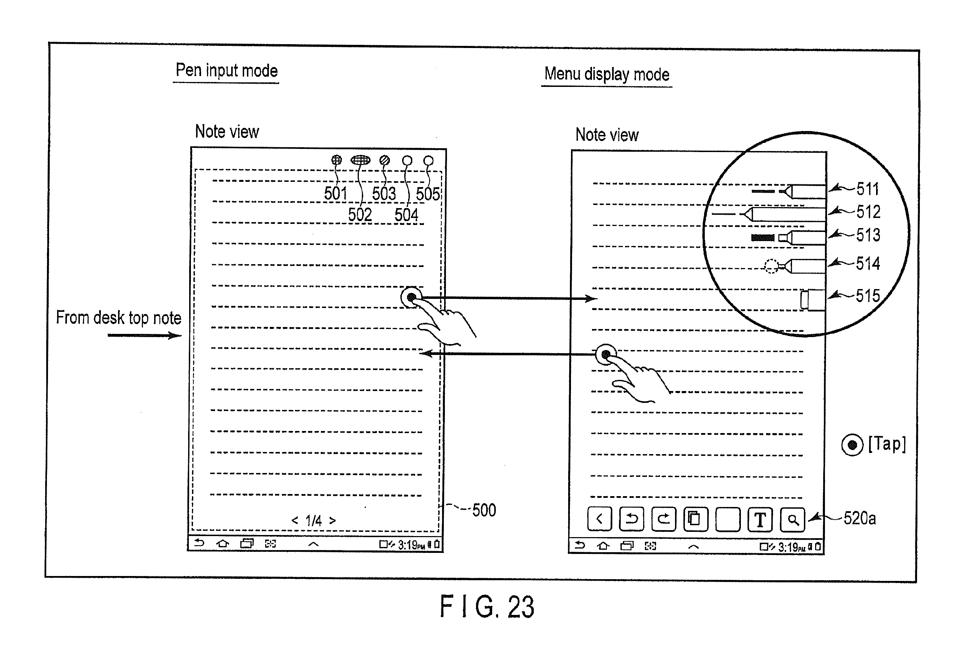

FIG. 23 shows the relationship between the note view screen displayed in pen input mode and the note view screen displayed in menu display mode.

The display processing module 50 displays the note view screen that can newly create a page (handwritten page) or browse and edit an existing page. The note view screen has two display styles corresponding to the two display modes. That is, the display processing module 50 (more specifically, the note view display module 50d) has two modes, that is, the pen input mode and the menu display mode.

The pen input mode is a mode in which handwriting input is enabled. The display processing module 50 displays the note view screen shown in the left side of FIG. 23 in pen input mode. This note view screen is a screen in which handwriting can be input. A rectangular area 500 surrounded by a broken line on the note view screen is a handwriting enabled area. In the handwriting enabled area 500, input from the digitizer 17C is used for drawing and is not used as an event indicating a gesture such as the tap and swipe. In an area other than the handwriting enabled area 500 on the note view screen, on the other hand, input from the digitizer 17C can also be used as an event indicating a gesture such as the tap and swipe. Input from the touch panel 17B is not used for drawing and is used as an event indicating a gesture such as the tap and swipe.

On the note view screen corresponding to the pen input mode, any page in any note file selected by the user can be displayed. The necessary minimum user interface is displayed in pen input mode so that the handwriting enabled area 500 of a size as large as possible can be secured inside the note view screen. In the present embodiment, a user interface to support a handwriting input operation of the user using the pen 100 is displayed in an end portion, for example, an upper end portion of the note view screen.

The user interface is a graphical user interface that enables the user to easily switch the style of drawing (drawing type) performed based on input from the digitizer 17C. The style of drawing includes, for example, attributes (the color, thickness, shape and so on) of a stroke drawn based on input from the digitizer 17C, attributes (the thickness, shape and so on) of an eraser's locus (erasing stroke) drawn based on input from the digitizer 17C, and attributes (the shape and so on) of a frame for the range selection drawn based on input from the digitizer 17C.

The user interface includes a plurality of icons (buttons) 501 to 505 corresponding to a plurality of styles of drawing so that the user can easily switch the style of drawing (drawing type). These icons 501 to 505 are arranged horizontally in a row in an upper end portion of the screen so that the handwriting enabled area is not reduced.

Each of the icons (buttons) 501 to 505 has a small circular shape so that the handwriting enabled area is not reduced. The icons 501, 502, 503 of these icons (buttons) 501 to 505 correspond to three different styles to draw a handwritten stroke. That is, three different styles to draw a handwritten stroke are assigned the icons 501, 502, 503.

Here, as a style to draw a handwritten stroke, for example, pen attributes like the color = black, thickness (line width) = n points, and pen point = pencil are assigned to the icon 501. In this case, the icon 501 may be an image representing a small circle filled in with black.

As another style to draw a handwritten stroke, for example, pen attributes like the color = red, thickness (line width) = m points, and pen point = ballpoint pen are assigned to the icon 502. In this case, the icon 502 may be an image representing a small circle filled in with red.

As still another style to draw a handwritten stroke, for example, pen attributes like the color = yellow, thickness (line width) = 2m points, and pen point = marker are assigned to the icon 503. In this case, the icon 503 may be an image representing a small circle filled in with yellow.

The user can easily switch the style of drawing of a handwritten stroke to be used, that is, the pen type to be used only by a single action of tapping on one of the icons 501, 502, 503 using the pen 100 or a finger.

The icon 504 corresponds to the style of drawing to select a range on the note view screen. That is, the style of drawing to select a range on the note view screen, for example, the style to draw a rectangle or a freehand frame for the range selection is assigned to the icon 504. The icon 505 corresponds to the style of drawing capable of erasing (making transparent) a handwritten stroke on the note view screen. That is, the style of drawing capable of erasing (making transparent) a handwritten stroke on the note view screen is assigned to the icon 505. For example, by drawing a locus (erasing stroke) of movement of the pen 100 in the same color as the background color of the page or drawing an erasing stroke having a transparent attribute to make transparent an intersection portion of the erasing stroke and another handwritten stroke, any handwritten stroke on the note view screen can be erased.

In the present embodiment, therefore, by taking single action of tapping on one of the icons 501, 502, 503, 504, 505 using the pen 100 or a finger, the user can not only switch the pen type (the red pen, black pen, or marker), but also make a switch among the pen, the range selection tool, and the eraser tool. The icon selected from the icons 501, 502, 503, 504, 505 is highlighted. In this case, the size of the selected icon may be increased or am ornamental border may be displayed around the selected icon.

If, for example, the icon 501 of the black pen is selected (tapped) and handwriting input is done using the pen 100, the display processing module 50 displays a black stroke (locus) on the note view screen in accordance with the movement of the pen 100. In addition, the note data generation module 40a generates page data based on stroke data input through the note view screen.

If the icon (selection button) 504 is selected, the display processing module 50 makes a range selection on the note view screen in accordance with a drag operation using the pen 100 or a finger.

In a conventional interface, it is necessary for the user to perform a plurality of operations including an operation to select the color and an operation to select the thickness by, for example, following menus of a hierarchical structure. If, instead of menus of a hierarchical structure, a plurality of menus including a menu to select the color and a menu to select the thickness is displayed on the screen simultaneously, the handwriting enabled area is reduced.

In the present embodiment, as described above, the plurality of small icons 501 to 505 (minimum pens) to which different styles of drawing are assigned are displayed on the note view screen and therefore, the handwriting enabled area 500 can be increased and also the pen type (the red pen, black pen, or marker), the range selection, and the eraser can quickly be switched.

If a finger is swiped on the note view screen, the display processing module 50 can change the page displayed on the note view screen to another page. If, for example, a finger is swiped in the right direction on the note view screen, the display processing module 50 displays the next page of the currently displayed page. If the currently displayed page is the first page of a note file, the second page of the note file is displayed on the note view screen in accordance with the swipe in the right direction.

Further, if a finger is tapped on an area other than the icons on the note view screen, the display processing module 50 makes a transition to the menu display mode. The menu display mode is a mode in which menus to set the plurality of styles of drawing described above can at least be displayed.

In menu display mode, as shown on the right side of FIG. 23, the display processing module 50 displays, instead of the user interface containing the plurality of small icons 501 to 505, another user interface (pen menu) larger than the above user interface on the note view screen (a group of icons enclosed with a circle). That is, the area of the user interface containing a group of icons enclosed with a circle is larger than that of the user interface containing the plurality of small icons 501 to 505. Further, the display processing module 50 also displays a menu 520a.

In menu display mode, handwriting input on the note view screen is not done. On the note view screen in menu display mode, input from the digitizer 17C and input from the touch panel 17B are used as an event showing a gesture like a tap operation, swipe operation, pinch operation or the like.

The pen menu on the note view screen in menu display mode enables the user to check to which functions the plurality of small icons 501 to 505 displayed in pen input mode corresponds. Further, the pen menu on the note view screen enables the user to set (or change) the style of drawing corresponding to the icons 501 to 505 and also to invoke various functions applicable to pages created/edited by the user.

Because, as described above, the user interface in a small size to which minimum functions such as switching the pen type are assigned is displayed on the note view screen in pen input mode, the user can effectively use the handwriting enabled area and concentrate on handwriting input to a page. In addition, by performing a simple operation of tapping on the note view screen, the user can switch to the menu display mode. In the menu display mode, the user can check the functions of the icons 501 to 505, and also functions (including the setting/change of the style of drawing) to be applied to a page can be invoked.

On the note view screen in menu display mode, instead of the user interface containing the plurality of small icons 501 to 505, the pen menu or the like as another user interface having a size larger than that of the above user interface is displayed. The pen menu corresponds to the plurality of styles of drawing performed based on input from the digitizer 17C and contains a plurality of large icons (buttons) 511 to 515 different from the plurality of small icons 501 to 505. The user can easily check, by referring to icons 511 to 515, which functions are assigned to the plurality of small icons 501 to 505 displayed in pen input mode.

Each of the icons 511 to 515 may be an image realistically representing the function (style of drawing) corresponding to the icon. The icons 511 to 515 correspond to the above small icons 501 to 505 respectively. While the small icons 511 to 515 corresponding to the black pen, red pen, marker, selection (range selection), and eraser are arranged in this order horizontally in a row in pen input mode, the icons 511 to 515 corresponding to the black pen, red pen, marker, selection, and eraser are arranged in this order vertically in a row in menu display mode. Though the arrangement of icons changes between the pen input mode and the menu display mode (horizontally or vertically), the order of the black pen, red pen, marker, selection, and eraser is unchanged. Therefore, the user can easily understand the correspondence of the icons 511 to 515 to the above small icons 501 to 505 respectively.

The icon 511 may be a realistic pen image (here, the side view of a pen) larger than the above small icon 501. While the above circular shape of the small icon 501 schematically represents the front view of a pen point, the icon 511 is configured by a stereoscopic image representing the side view of a pen. In the icon 511, the tip of the pen is displayed in black and the pen point is displayed in the thickness corresponding to the thickness of the currently set black pen. Alternatively, as shown in FIG. 23, a black line may be displayed near the pen point in the thickness corresponding to the thickness of the currently set black pen.

The icon 512 may be a realistic pen image (here, the side view of a pen) larger than the above small icon 502. While the above circular shape of the small icon 502 schematically represents the front view of a pen point, the icon 512 is configured by a stereoscopic image representing the side view of a pen. In the icon 512, the tip of the pen is displayed in red and the pen point is displayed in the thickness corresponding to the thickness of the currently set red pen. Alternatively, as shown in FIG. 23, a red line may be displayed near the pen point in the thickness corresponding to the thickness of the currently set red pen.

The icon 513 may be a realistic pen image (here, the side view of a pen) larger than the above small icon 503. While the above circular shape of the small icon 503 schematically represents the front view of a pen point, the icon 513 is configured by a stereoscopic image representing the side view of a pen. In the icon 513, the tip of the pen is displayed in yellow and the pen point is displayed in the thickness corresponding to the thickness of the currently set marker. Alternatively, as shown in FIG. 23, a line of the currently set marker color (here, yellow) may be displayed near the pen point in the thickness corresponding to the thickness of the currently set marker.

Similarly, the icons 514, 515 are configured by realistic images larger than the above icons 504, 505.

These icons 511 to 515 having an elongated shape are arranged vertically in a row on the note view screen so that the longitudinal direction of these icons extends in the lateral direction of the note view screen. The position of the currently selected icon on the note view screen is automatically changed. If, for example, the display mode is switched from the pen input mode to the menu display mode while the icon 502 is selected by the user or the icon 512 is selected by the user on the note view screen in menu display mode, the position of the icon 512 is changed. In this case, the image of the pen used as the icon 512 may be displayed, as shown in FIG. 23, like projecting more toward the center of the screen than pen images of other icons. By changing the display position of the selected icon in this manner, which icon is currently selected can presented to the user in a way that is easy to understand.

If one of the icons 511 to 515 is swiped in the left direction (or the selected icon is further tapped), the display processing module 50 may display a detailed setting menu to set the style of drawing corresponding to the swiped icon. By operating the detailed setting menu, the user can change the style of drawing assigned to the swiped icon. Also, by operating the detailed setting menu, the user can also create a new style of drawing. In this case, a new small icon and a large realistic icon to which the new style of drawing is assigned are displayed on the note view screen in pen input mode and the note view screen in menu display mode by the display processing module 50 respectively.

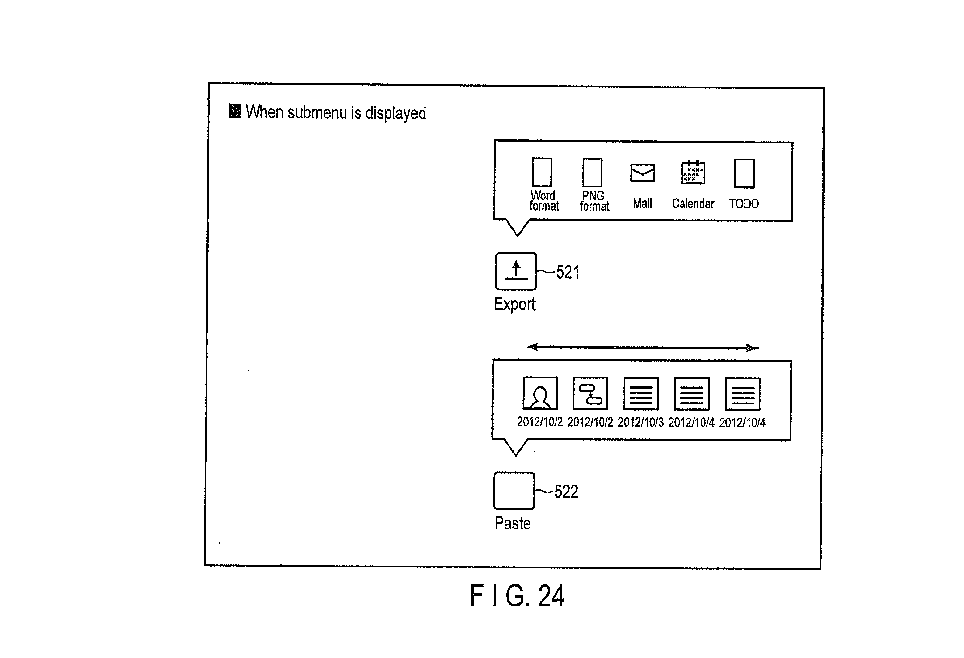

The menu 520a displays a plurality of icons (buttons) to which a plurality of functions is assigned. The content of the menu 520a, that is, types of the plurality of icons displayed inside the menu 520a are automatically changed in accordance with content of the page displayed on the note view screen. An icon associated with a submenu may also be displayed in the menu 520a. If the icon associated with a submenu is tapped, the display processing module 50 displays a submenu as shown in FIG. 24. The user can select an icon corresponding to an intended function from the submenu.

In FIG. 24, an example of the submenu corresponding to an export icon (button) 521 and an example of the submenu corresponding to a paste icon (button) 522 are shown. The export icon 521 is an icon to which a function to export the page displayed on the note view screen to other various folders is assigned. When the export icon 521 is tapped by the user, the display processing module 50 displays a submenu containing some icons corresponding to the file formats of an application program corresponding to the export destination folder. The paste icon (button) 522 is an icon to which a function to paste other data to the page displayed on the note view screen is assigned.

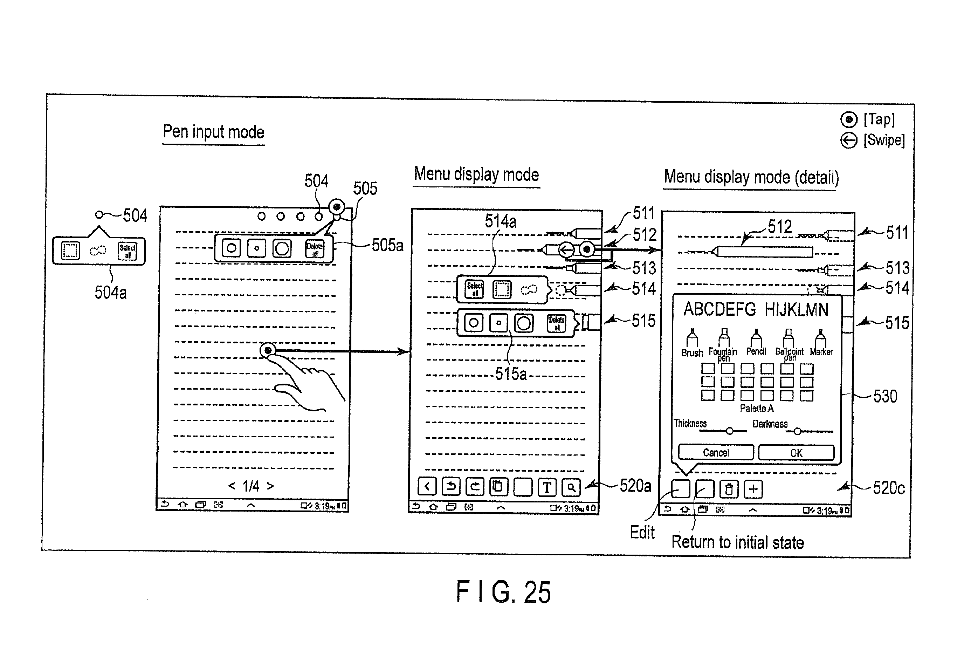

As shown in FIG. 25, a submenu can be assigned to some icons displayed on the note view screen in pen input mode and similarly, a submenu can be assigned to some icons displayed on the note view screen in menu display mode.

In FIG. 25, a case when a submenu is assigned to the icon 504 for range selection and a submenu is assigned to the icon 505 of an eraser is assumed.

When a finger or the pen 100 is tapped on the icon 504, a submenu 504a is displayed on the note view screen by the display processing module 50. In the submenu 504a, three icons corresponding to "Rectangular", "Freehand frame", and "Select all" are displayed. The user can select one of these three selection tools. If the icon corresponding to "Select all" is selected, the display processing module 50 can select entire page being displayed.

When a finger or the pen 100 is tapped on the icon 505, a submenu 505a is displayed on the note view screen by the display processing module 50. In the submenu 505a, three icons to specify the thickness of the eraser (thickness of drawing corresponding to the eraser) and an icon to specify "Erase all" are displayed.

Also on the note view screen in menu display mode, a submenu 514a with content similar to that of the submenu 504a can be displayed by associating with the icon 514 and a submenu 515a with content similar to that of the submenu 505a can be displayed by associating with the icon 515.

If one of the icons 511 to 515 is swiped in the left direction with a finger or the pen 100 (or a finger or the pen 100 is further tapped on the selected icon) on the note view screen in menu display mode, the display processing module 50 displays, as shown on the right side of FIG. 25, the swiped icon (here, the icon 512) in the center of the note view screen and also grays out other icons. Then, instead of the menu 520a, the display processing module 50 displays another menu 520c on the note view screen. If a finger or the pen 100 is tapped on, for example, an "Edit" icon inside the menu 520c, the display processing module 50 displays a detailed setting menu 530 to set the style of drawing on the note view screen. By operating the detailed setting menu 530, the user can specify the pen point type (the brush, fountain pen, pencil, ballpoint pen, or marker), color, thickness, and darkness to be assigned to the icon 512 (that is, icon 502).

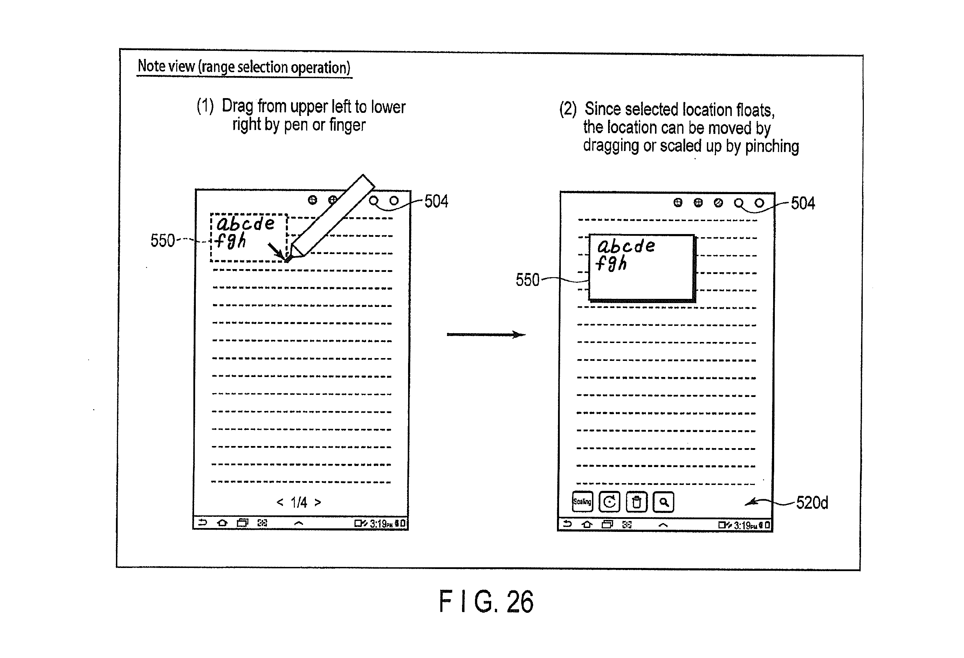

FIG. 26 shows a range selection operation.

It is assumed here that the range is selected by using a rectangular frame. If a finger of the pen 100 is tapped on the icon 504 for range selection, the display processing module 50 enters the range selection mode. Then, as shown on the left side of FIG. 26, the display processing module 50 draws a rectangular frame 550 in the style assigned to the icon 504 on the note view screen based on a movement operation of a finger or the pen 100 on the note view screen in pen input mode.

If, for example, a finger or the pen 100 is moved (drag operation) toward the lower right while in contact with the note view screen and then moved off the note view screen, the rectangular frame 550 having the initial contact position (drag start position) of the finger or the pen 100 on the note view screen as the upper left vertex and the position where the finger or the pen 100 is moved off the screen as the lower right vertex. The display processing module 50 selects an object like a handwritten character contained in the rectangular frame 550. The selected location (area inside the rectangular frame 550) is, as shown on the right side of FIG. 26, in a movable state (floating state). In this case, the display processing module 50 may add a shadow line to the rectangular frame 550 to present to the user that the selected location is movable. The user can move or rotate the selected location, using the pen 100 or a finger. Also, the user can enlarge or reduce the selected location by performing a pinch-in operation or a pinch-out operation at the selected location.

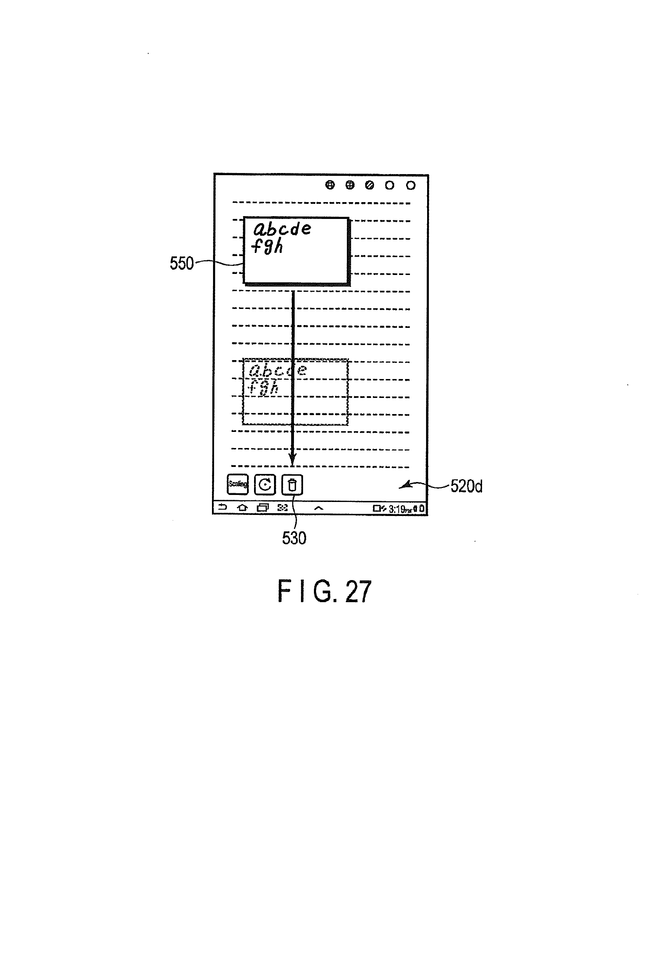

Further, the display processing module 50 displays a submenu 520d including a scaling icon, rotation icon, trash icon, and search icon. If a finger or the pen 100 is tapped on one of these icons, the display processing module 50 executes the function assigned to the tapped icon for the selected location. The display processing module 50 performs processing like scaling of the selected location, rotation of the selected location, erasure of the selected location, and display of a search screen. If, for example, as shown in FIG. 27, a trash icon 530 is tapped, the display processing module 50 moves the selected location enclosed with the rectangular frame 550 toward the trash icon 530. The display processing module 50 grays out context of the selected location during movement of the selected location. Thereby, the context of the selected location disappears from the note view screen.

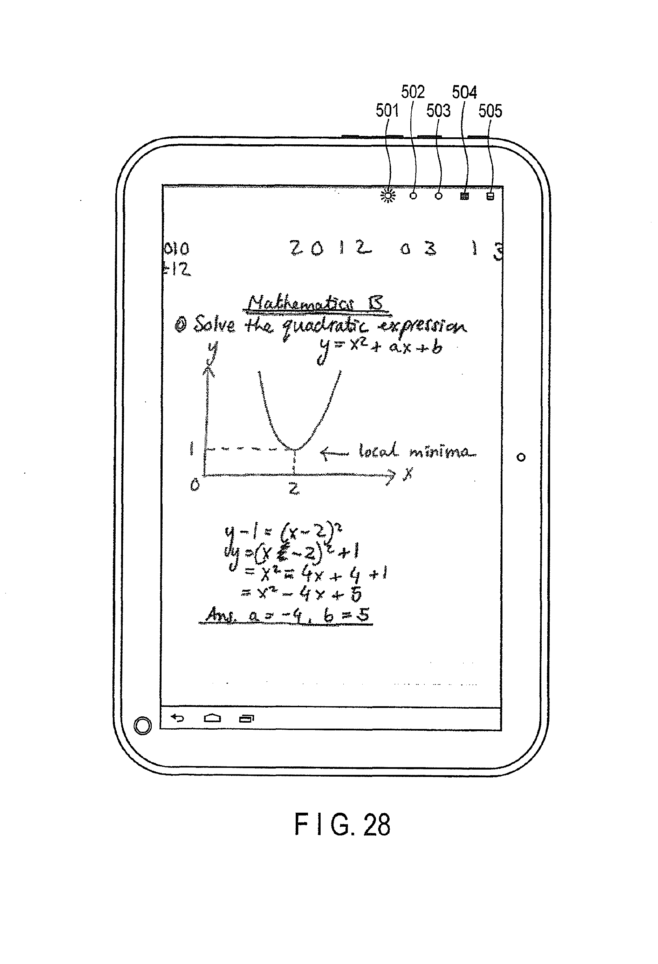

FIG. 28 shows an example of the note view screen in pen input mode. As shown in FIG. 28, the whole page is displayed on the note view screen in pen input mode. Here, a case when a page in which handwritten formulas, handwritten characters, or handwritten graphs are already written is displayed is assumed. The user can write a new handwritten character on the handwritten page or erase a handwritten character.

Now, a case when the icon 501 is selected is assumed. In this case, the display processing module 50 draws a stroke (stroke locus) on the page in the style (for example, the color, thickness and the like) corresponding to the icon 501, based on input from the digitizer 17C in accordance with movement of the pen 100 on the note view screen. If the icon 502 is tapped by the user, the display processing module 50 this time draws a stroke (stroke locus) on the page in the style (for example, the color, thickness and the like) corresponding to the icon 502, based on input from the digitizer 17C in accordance with movement of the pen 100 on the note view screen.

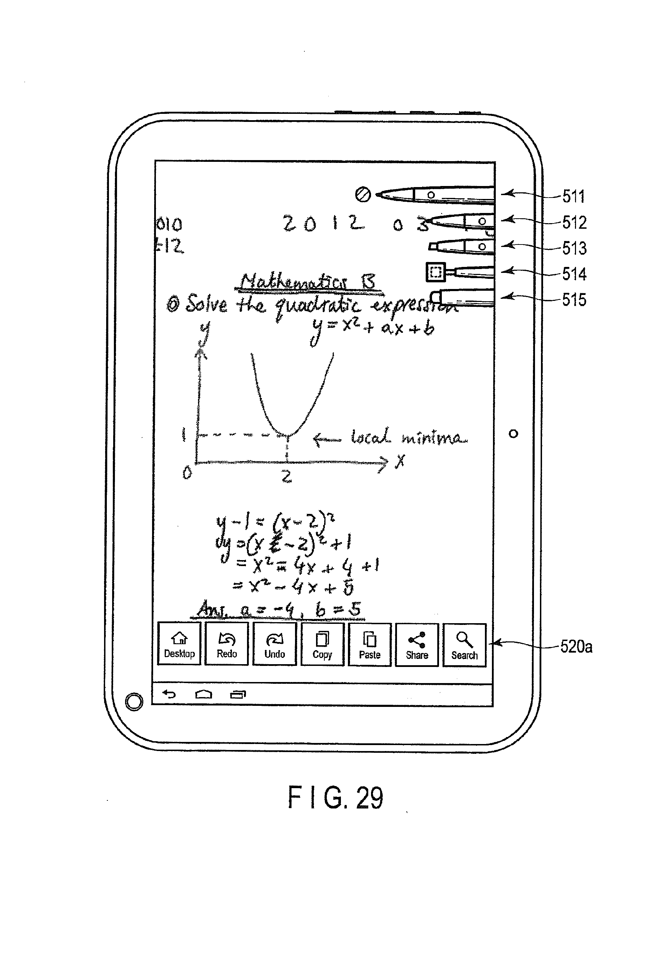

If the user's finger is tapped on this page, the display processing module 50 receives input by contact (here, tapping) with the note view screen from the touch panel 17B. In response to the input, the display processing module 50 migrates from the pen input mode to the menu display mode and changes content of the note view screen to content as shown in FIG. 29. Thus, in the present embodiment, the pen input mode is switched to the menu display mode in response to input by contact with the note view screen from the touch panel 17B. Drawing on the note view screen is performed based on input from the digitizer 17C and thus, no drawing is performed even if a finger is tapped on the screen. Therefore, the user can easily switch the display mode to the menu display mode only by performing an operation to tap a finger on the screen.

After making a transition to the menu display mode, as shown in FIG. 29, the display processing module 50 displays the plurality of icons 511 to 515, each of which containing a realistic pen image, on the note view screen, instead of the above icons 501 to 505. Because the icon 501 is selected on the note view screen in pen input mode, the icon 511 corresponding to the icon 501 is displayed in a position different from that of the other icons 512 to 515. Further, the display processing module 50 displays the menu 520a on the note view screen. In addition to a "desktop" icon to return to the desktop note screen (FIG. 19), icons corresponding to functions like "undo", "redo", "copy", "paste", "share", "search" and the like are displayed in the menu 520a.

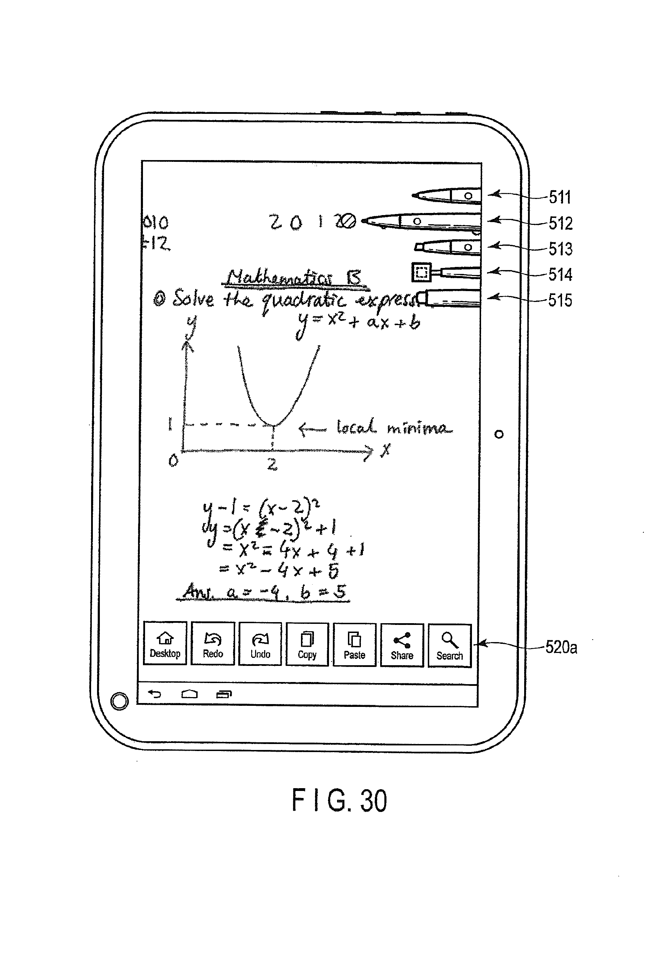

If the icon 512 is tapped by the user, as shown in FIG. 30, the display processing module 50 aligns the icon 511 with the other icons and also changes the position of the icon 512. If a finger is tapped on the note view screen in this state, the display processing module 50 changes the style of drawing to the style assigned to the icon 512 and then displays the note view screen in pen input mode. On note view screen in pen input mode, the icon 502 corresponding to the icon 511 is highlighted. The display processing module 50 draws a stroke (stroke locus) on the page in the style (for example, the color, thickness and the like) assigned to the icon 502, based on input from the digitizer 17C in accordance with movement of the pen 100 on the note view screen.

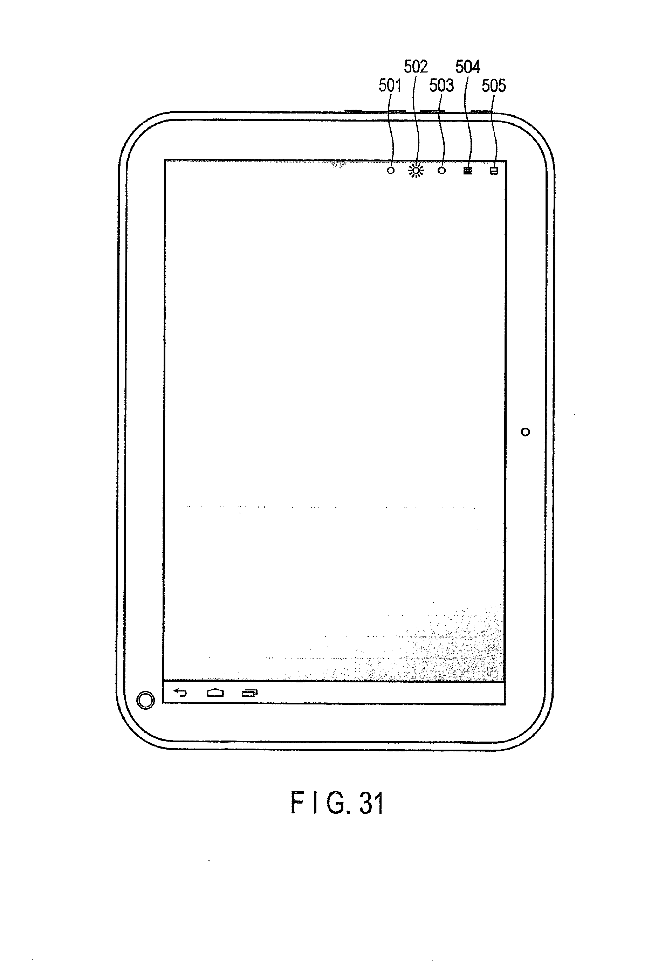

FIGS. 31 to 35 show transition processes from the note view screen in pen input mode to the note view screen in menu display mode.

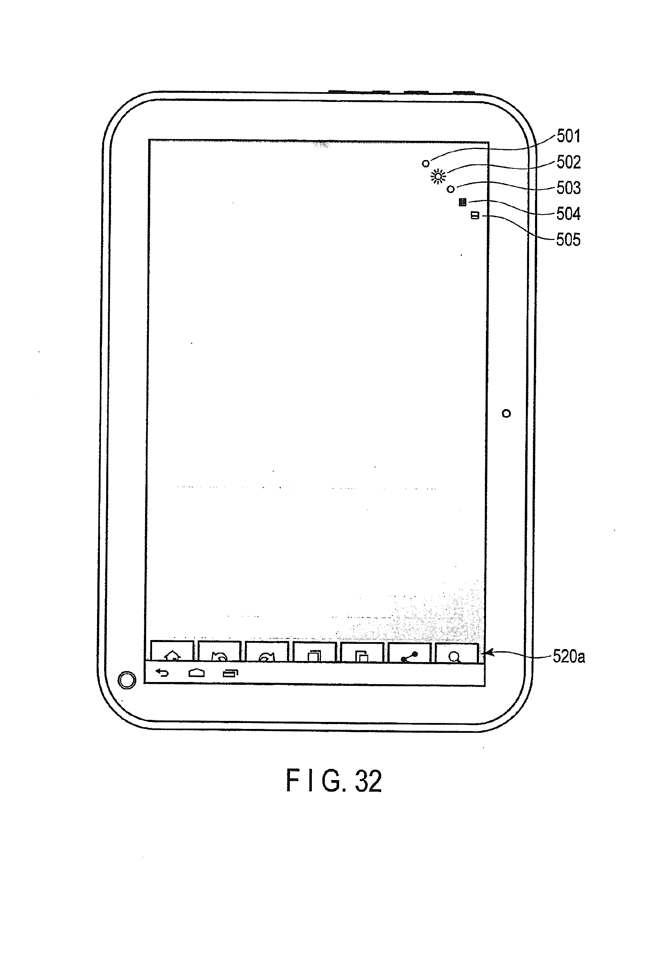

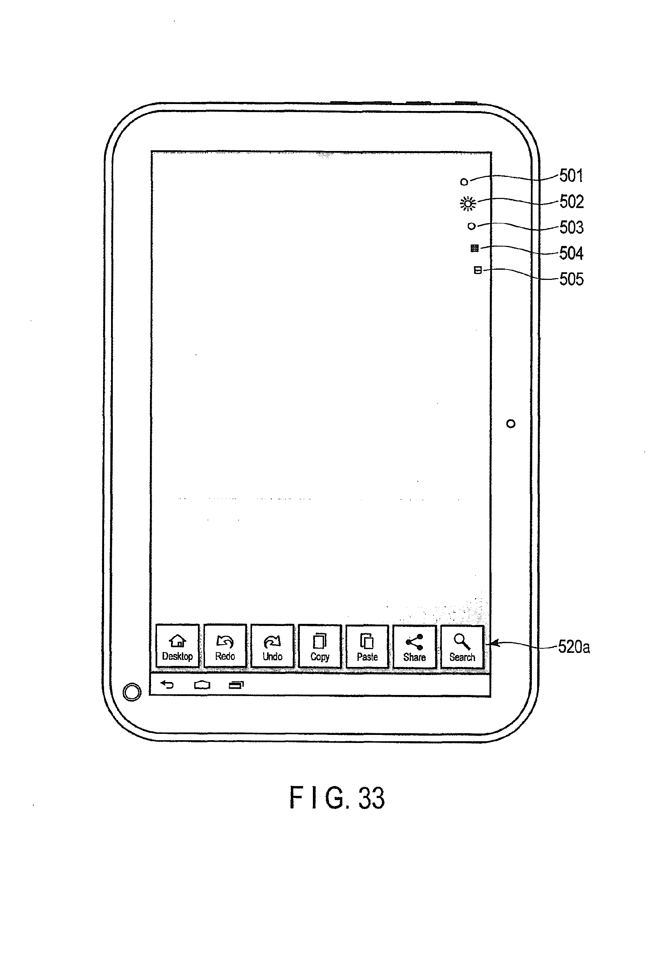

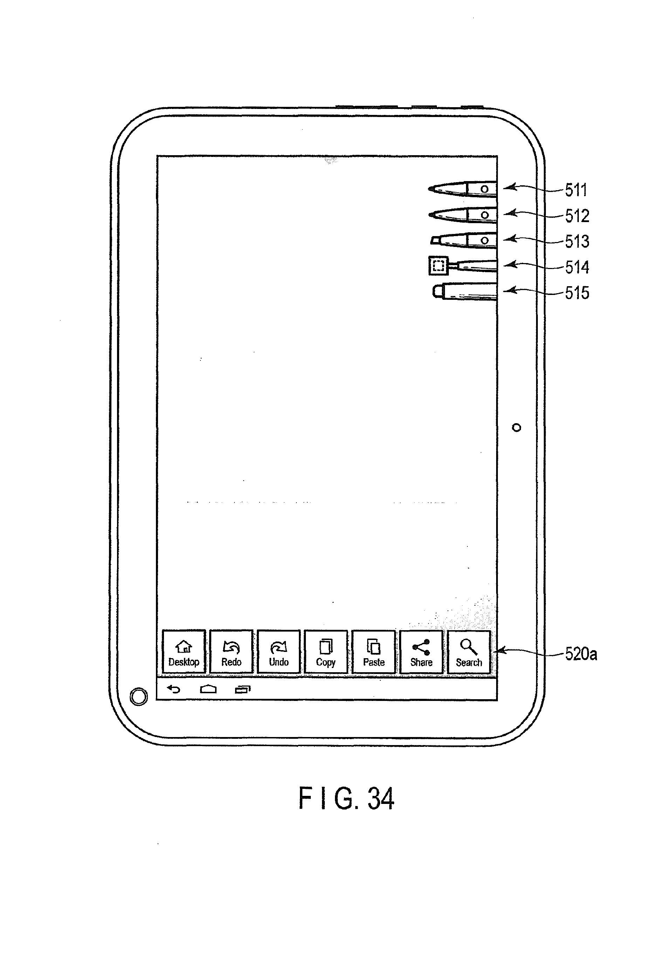

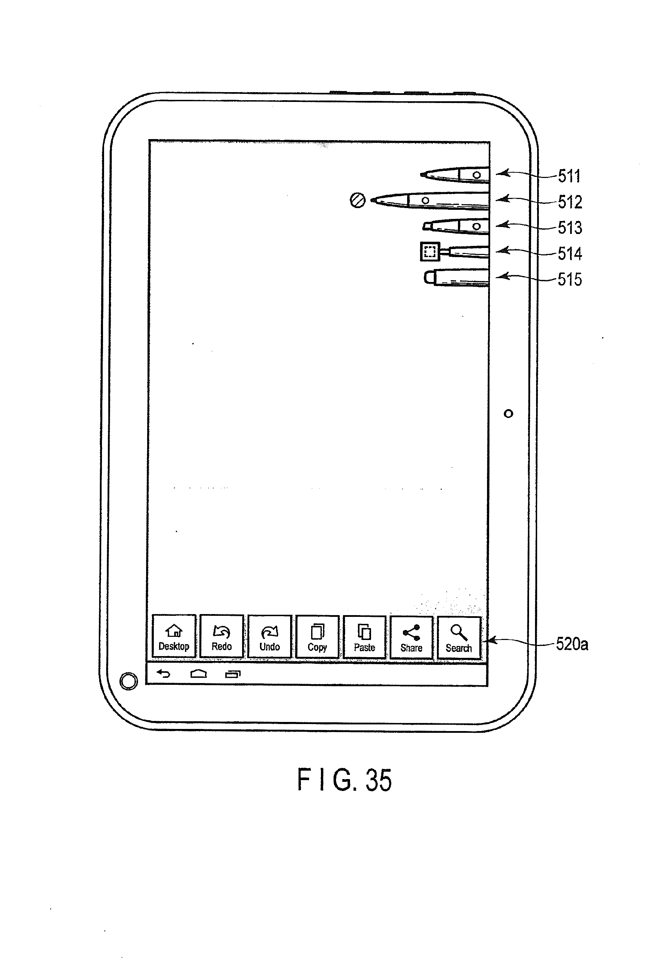

When switched from the pen input mode to the menu display mode, the display processing module 50 displays the realistic pen icons 511 to 515 on the note view screen using animation that can express the correspondence between the small icons 501 to 505 and the realistic pen icons 511 to 515 as transition images. That is, if a finger is tapped on the screen in FIG. 31, as shown in FIGS. 32 and 33, the display processing module 50 moves the icons 501 to 505 gradually and continuously so that the icons 501 to 505 are arranged vertically in a row in a right end portion of the note view screen. When the icons 501 to 505 are arranged vertically in a row in a right end portion of the note view screen, as shown in FIG. 34, the display processing module 50 displays the realistic pen icons 511 to 515 on the note view screen, instead of the icons 501 to 505. Then, as shown in FIG. 35, the display processing module 50 changes the position of the icon (here, the icon 512) corresponding to the currently selected style of drawing and also displays the menu 520a in a lower end portion of the note view screen.

As the animation, any kind of animation capable of presenting the correspondence between the small icon 501 to 505 and the realistic pen icons 511 to 515 to the user can be used. For example, while the icons 501 to 505 are moved, the icons 501 to 505 may be changed to the icons 511 to 515.

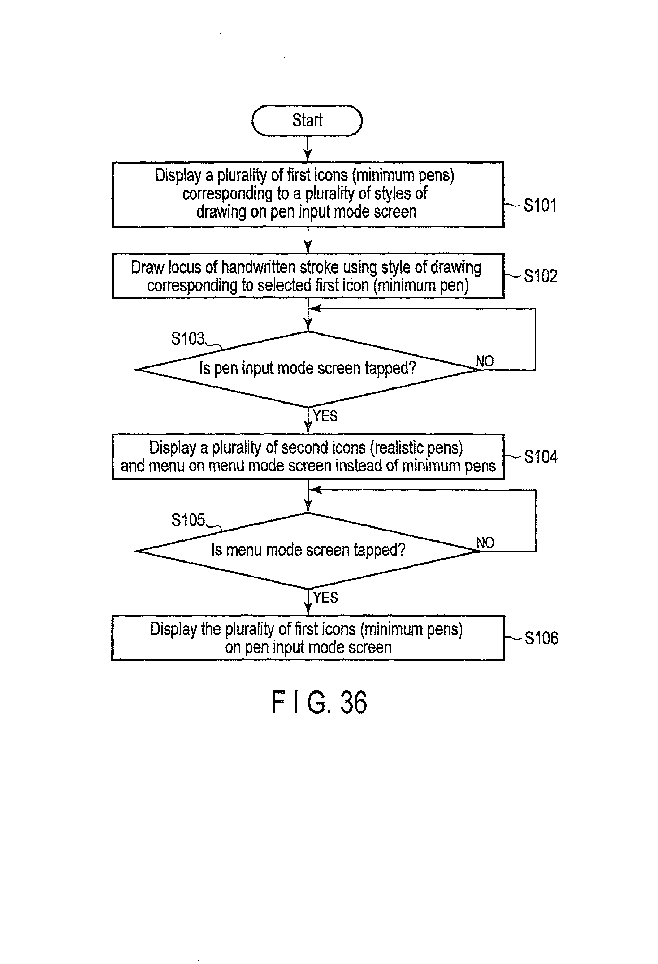

The flow chart in FIG. 36 shows a processing procedure performed by the display processing module 50. As described above, the display processing module 50 can make a transition from the desktop note screen to the pen input mode (note view screen), can make a transition from the page list screen to the pen input mode (note view screen), and further can make a transition from the simplified page list screen to the pen input mode (note view screen).

When a transition from the desktop note screen to the pen input mode is made, as described with reference to FIG. 19, the display processing module 50 first displays a first note selected from a plurality of notes in a style in which at least a portion of each of a plurality of pages in the first note is visible and also the plurality of pages is overlaid on the desktop note screen. Then, the display processing module 50 performs a page forwarding operation or the like in accordance with an operation performed by the user. Then, in accordance with a page selection operation or a tap operation of a pen icon performed by the user, the display processing module 50 makes a transition to the pen input mode, and displays the current head page of a plurality of pages and the plurality of first icons 501 to 505 (minimum pens) corresponding to the plurality of styles of drawing on the note view screen (pen input mode screen) (step S101).

On the other hand, when a transition from the page list screen to the pen input mode is made, as described with reference to FIG. 19, the display processing module 50 first displays a first note selected from a plurality of notes in a style in which at least a portion of each of a plurality of pages in the first note is visible and also the plurality of pages is overlaid on the desktop note screen. Then, as described with reference to FIG. 20, the display processing module 50 displays a plurality of thumbnails corresponding to the plurality of pages on the page list screen in accordance with an operation for the grid display performed by the user. The thumbnail is a reduced image of an image corresponding to the corresponding page. If some thumbnail (first thumbnail) is selected from the plurality of thumbnails on the page list screen, the display processing module 50 makes a transition to the pen input mode and displays the page corresponding to the first thumbnail and the plurality of first icons 501 to 505 (minimum pens) corresponding to the plurality of styles of drawing on the note view screen (pen input mode screen) (step S101).

The user can designate the style of drawing by touching (tapping) the pen 100 or a finger on one of the plurality of small icons 501 to 505. The user can perform a handwriting input operation on the note view screen using the pen 100. In this case, the display processing module 50 receives a coordinate sequence corresponding to the handwriting input operation from the digitizer 17C. Based on the input from the digitizer 17C, the display processing module 50 draws a locus corresponding to movement of the pen 100 on the note view screen in the style corresponding to the selected icon (step S102). If, for example, the icon 501 is selected, the display processing module 50 draws (displays) a stroke in the style of drawing corresponding to the icon 501, that is, the first style (color = black, thickness (line width) = n points, and pen point = pencil) for drawing a handwritten stroke on the note view screen, based on input from the digitizer 17C. If the icon 502 is tapped, the display processing module 50 switches the style of drawing to be used to the style (color = red, thickness (line width) = m points, and pen point = ballpoint pen) corresponding to the icon 502. Then, the display processing module 50 draws (displays) a stroke in the switched style of drawing on the note view screen, based on input from the digitizer 17C.

If a tap operation (contact operation) is performed on the note view screen with a finger, the display processing module 50 can receive an event indicating the tap operation from the touch panel 17B. The display processing module 50 includes a mode switching module that switches the display mode between the above pen input mode and the above menu display mode, and the display processing module 50 determines whether the note view screen is tapped by a finger (step S103). In response to reception of the event, that is, in response to input by contact with the note view screen from the touch panel 17B, the display processing module 50 determines that the note view screen has been tapped by a finger.

If the note view screen in pen input mode is tapped by a finger (YES in step S103), the display processing module 50 switches the display mode from the pen input mode to the menu display mode. Then, the display processing module 50 displays the plurality of second icons 511 to 515 (realistic pens) on the note view screen as a new user interface, instead of the plurality of first icons 501 to 505 (minimum pens) described above (step S104). In step S104, the display processing module 50 also displays the menu 520a on the note view screen as part of the above new user interface.

If the note view screen in menu display mode is tapped by a finger (YES in step S105), the display processing module 50 brings the display mode back to the pen input mode. Then, the display processing module 50 makes the menu 520a non-displayed and also displays the plurality of first icons 501 to 505 (minimum pens) on the note view screen, instead of the plurality of second icons 511 to 515 (realistic pens) (step S106).

In the present embodiment, as described above, in the pen input mode capable of performing the handwriting input, a user interface, which has a first size and includes the plurality of icons 501 to 505 corresponding to the plurality of styles of drawing performed based on input from the digitizer, is displayed on the note view screen. Then, if one of the plurality of icons 501 to 505 is selected, based on input from the digitizer 17C, drawing is performed on the screen in the style corresponding to the selected icon. Therefore, the user can easily switch the style (such as the pen type) of drawing only by a single action of tapping on one of the icons 501, 502, 503 using the pen 100 or a finger.

In the menu display mode capable of displaying at least a menu to set the plurality of styles, another user interface, which has a second size larger than the first size and includes the plurality of icons 511 to 515 corresponding to the plurality of styles, is displayed on the note view screen. Therefore, by using the menu display mode when necessary, the user can check the style of drawing corresponding to the icons 501 to 505, any style of drawing can be set/changed, or various other operations can be performed.

Thus, by using two modes of the pen input mode and the menu display mode and changing the user interface between the pen input mode and the menu display mode, the handwriting enabled area in pen input mode can be increased. Therefore, handwritten data containing many handwritten characters and handwritten figures and tables can easily be browsed or created so that handwritten data can easily be handled.

Since the various processes on a handwritten document in the present embodiment can be realized by a computer program and therefore, the same effect as the present embodiment can easily be realized only by installing the computer program on a normal computer through a computer readable storage medium storing the computer program and executing the computer program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electronic device, comprising:
a display processing module configured to display, in first mode, a first user interface having a first size on a screen, the first user interface comprising a plurality of first icons corresponding to a plurality of styles of drawing performed based on input from a first sensor, the display processing module being further configured to display, in second mode capable of displaying at least a menu to set the plurality of styles, a second user interface having a second size larger than the first size on the screen, the second user interface comprising a plurality of second icons corresponding to the plurality of styles; and
a switching module configured to switch a mode of display processing module between the first mode and the second mode,
wherein if one of the plurality of first icons is selected in the first mode, the display processing module performs drawing on the screen in a first style based on input from the first sensor, the first style corresponding to the one of the plurality of first icons.

2. The electronic device of Claim 1,
wherein, in the first mode, the switching module switches the first mode to the second mode in response to the input by contact with the screen from a second sensor different from the first sensor.

3. The electronic device of Claim 1,
wherein the plurality of first icons includes at least a first icon corresponding to a first style of drawing of a handwritten stroke and a second icon corresponding to a second style of drawing of handwritten stroke, and wherein the second style is different from the first style.

4. The electronic device of Claim 3,
wherein the plurality of first icons further includes a third icon corresponding to a style of drawing capable of erasing a handwritten stroke on the screen.

5. The electronic device of Claim 3,
wherein the plurality of first icons further includes a fourth icon corresponding to a style of drawing to select a range on the screen.

6. The electronic device of Claim 1,
wherein the plurality of first icons are aligned horizontally in a row on the screen, and
wherein the plurality of second icons have elongated shapes and are aligned vertically in a row on the screen so that longitudinal directions of the plurality of second icons extend in a lateral direction of the screen.

7. The electronic device of Claim 1,
wherein if one of the plurality of second icons is selected, the display processing module changes a position on the screen where the one of the plurality of second icons is displayed.

8. The electronic device of Claim 1,
wherein upon switching from the first mode to the second mode, the display processing module displays the second user interface using animation capable of representing a correspondence between the plurality of first icons and the plurality of second icons.

9. The electronic device of Claim 1,
wherein the plurality of second icons are a plurality of images representing sides views of a plurality of pens.

10. The electronic device of Claim 1,
wherein the display processing module is further configured to:
display on a desktop screen a first note selected from a plurality of notes in a style in which at least a portion of each of a plurality of pages in the first note is visible and also the plurality of pages are overlaid,
perform a page forwarding operation in accordance with an operation performed by a user, and
makes a transition to the first mode in accordance with the operation performed by the user to display a current head page of the plurality of pages and the first user interface on a screen.

11. The electronic device of Claim 1,
wherein the display processing module is further configured to:
display on a desktop screen a first note selected from a plurality of notes in a style in which at least a portion of each of a plurality of pages in the first note is visible and also the plurality of pages is overlaid,
display a plurality of thumbnails corresponding to the plurality of pages in accordance with an operation performed by a user, and
make a transition to the first mode to display a first page of the plurality of pages corresponding to a first thumbnail and the first user interface on a screen, if the first thumbnail is selected from the plurality of thumbnails.

12. An input method of handwriting input, comprising:
displaying, in first mode, a first user interface having a first size on a screen, the first user interface comprising a plurality of first icons corresponding to a plurality of styles of drawing performed based on input from a first sensor;
performing drawing on the screen in a first style based on input from the first sensor if one of the plurality of first icons is selected in the first mode, the first style corresponding to the one of the plurality of first icons;
switching a display mode from the first mode to a second mode capable of displaying at least a menu to set the plurality of styles; and
displaying, in the second mode, a second user interface having a second size larger than the first size on the screen, the second user interface comprising a plurality of second icons corresponding to the plurality of styles.

13. A program which is executable by a computer, the program casing the computer to execute procedures of:
displaying, in first mode, a first user interface having a first size on a screen, the first user interface comprising a plurality of first icons corresponding to a plurality of styles of drawing performed based on input from a first sensor;
performing drawing on the screen in a first style based on input from the first sensor if one of the plurality of first icons is selected in the first mode, the first style corresponding to the one of the plurality of first icons;
switching a display mode from the first mode to a second mode capable of displaying at least a menu to set the plurality of styles; and
displaying, in the second mode, a second user interface having a second size larger than the first size on the screen, the second user interface comprising a plurality of second icons corresponding to the plurality of styles.
